# FASCICULE DE BREVET EUROPEEN

(11) **EP 1 599 281 B1**
(45) Date de publication et mention de la délivrance du brevet: **03.09.2008**
(21) Numéro de dépôt: 04714349.0
(22) Date de dépôt: 25.02.2004
(51) Int. Cl.: B01F 17/00, C08F 220/04, C08F 220/06, C08F 220/08, C04B 24/26, C04B 24/32

(54) **DISPERSANT POLYMERE COMME AGENT FLUIDIFIANT DE COMPOSITIONS DE LIANT HYDRAULIQUE ET PROCEDE DE PREPARATION**
POLYMERISCHE DISPERGIERMITTEL ALS VERFLÜSSIGUNGSMITTEL IN ZUSAMMENSETZUNGEN VON HYDRAULISCHEN BINDEMITTELN UND VERFAHREN ZU DEREN HERSTELLUNG
USE OF A POLYMER DISPERSANT AS A FLUIDISING AGENT FOR HYDRAULIC BINDER COMPOSITIONS AND PREPARATION METHOD THEREOF

(30) Priorité: 03.03.2003 FR 0302576
(43) Date de publication de la demande: 30.11.2005
(73) Titulaire: Cray Valley S.A., 92400 Courbevoie (FR)
(72) Inventeur: HIDALGO, Manuel, F-89530 BRIGNAIS (FR); BENSARSA, Djamel, F-69110 SAINTE FOY LES LYON (FR); PABON, Martial, F-78980 NEAUPHLETTE (FR); GIBERTI, Fabio, I-20037 Paderno Dugnano (IT); CORPART, Jean-Marc, F-69002 Lyon (FR)
(74) Mandataire: Killis, Andréas
(86) Numéro de dépôt international: PCT/FR2004/000417
(87) Numéro de publication internationale: WO 2004/080908

(56) Documents cités:
- EP-A- 0 884 290
- EP-A- 1 209 133
- US-B1- 6 384 111

## Description

La présente invention concerne des dispersants polymères utilisables entre autres comme agents fluidifiants de compositions de liant hydraulique, un procédé spécifique de préparation et d'autres utilisations comme dispersants.

L'utilisation de fluidifiants ou de dispersants dans les suspensions de liants hydrauliques minéraux comme le ciment est bien connue et largement répandue dans les industries concernées et, en particulier, dans celle du béton. Une catégorie de fluidifiants devenue courante dans la préparation de pâtes à base de ciment est celle des hauts réducteurs d'eau, également appelés super plastifiants. Ces fluidifiants ou dispersants permettent de conférer à la pâte un comportement plus fluide qu'en leur absence, ainsi que de prolonger dans le temps cette fluidité. De plus, leur utilisation permet de limiter la quantité d'eau incorporée dans le milieu (d'où l'appellation « hauts réducteurs d'eau »), lors de la préparation de la pâte contenant le liant hydraulique minéral, ce qui a pour conséquence directe, une amélioration des propriétés mécaniques du matériau final endurci. Ces trois effets (réduction d'eau, maintien de rhéologie et amélioration des propriétés mécaniques du matériau final) sont aujourd'hui recherchés dans des proportions variables selon l'application à donner au matériau à base du liant hydraulique minéral. Les mécanismes d'action de ces molécules fluidifiantes ont été décrits dans des ouvrages tels que le livre édité par Jacques BARON et Jean-Pierre OLLIVIER, Les bétons, Bases et données pour leur formulation (Paris : Editions Eyrolles, 1999). D'un point de vue structurelle, les super plastifiants appartiennent à l'une des deux familles chimiques suivantes :

### A) La famille des polymères sulphonés

Depuis longtemps, l'effet dispersant des ligno-sulphonates est connu dans l'industrie du béton. De ce fait, les polymères synthétiques de structure apparentée tels que les condensats de naphtalène sulphoné et formaldéhyde (polynaphtalène sulphonate) et les condensats de mélamine sulphonée et formaldéhyde (polymélamine sulphonate) constituent, encore aujourd'hui, une partie importante des super plastifiants utilisés pour les liants à base de ciment. Cependant, la capacité dispersante de cette famille de composés a été largement dépassée par de nouveaux polymères synthétiques appartenant à une famille de plus récente apparition.

### B) La famille des polycarboxylates

Depuis une vingtaine d'années, cette famille a progressivement envahi le marché des super plastifiants car elle permet d'obtenir, et de loin, les meilleurs résultats en terme de réduction d'eau. Dit autrement, les polycarboxylates permettent les plus grandes fluidités des pâtes cimentaires pour un rapport eau sur ciment (E/C) donné. Les super plastifiants polycarboxylates sont des polymères ramifiés dont la chaîne principale comporte des groupes carboxyliques et dont les chaînes latérales les plus longues comportent souvent des séquences de type polyéther (comme le polyoxyde d'éthylène). Les polycarboxylates doivent leur très grand effet dispersant de particules minérales à une partie chargée de leur molécule (en milieu alcalin comme celui des pâtes cimentaires) autour de la chaîne principale, ainsi qu'aux chaînes latérales non-ioniques plus ou moins longues et capables d'apporter une dispersion par des effets de répulsion stérique.

Parmi les polycarboxylates les plus utilisés, on trouve ceux obtenus à travers la copolymérisation d'acides carboxyliques insaturés et des (meth)acrylates de (méthoxy)polyéthylène glycol. D'autres monomères tels que les esters acryliques, le styrène, des monomères sulphonés, des dérivés maléïques/fumariques, entre autres, peuvent également faire partie de la structure de ces polycarboxylates.

Quelle que soit leur structure, les polycarboxylates sont généralement des copolymères (où plus d'un monomère est utilisé lors de leur synthèse) de masse moléculaire relativement faible, solubles ou dispersibles dans l'eau. Le contrôle de leur masse moléculaire pendant la synthèse requiert le plus souvent l'utilisation d'un agent de transfert de chaîne qui devient un ingrédient important de la recette de polymérisation. Les agents de transfert (aussi appelés limitateurs de chaîne) les plus utilisés en polymérisation radicalaire sont des composés de la famille des thiols, la liaison -S-H étant une source reconnue d'hydrogènes labiles capables de terminer des chaînes en croissance, tout en permettant le redémarrage de nouvelles chaînes à partir du radical S^{•}. Or, lorsque les super plastifiants polycarboxylates sont synthétisés par un procédé de polymérisation radicalaire en solution aqueuse, il devient nécessaire d'utiliser des agents de transfert d'une hydrophilie considérable (voire hydrosolubles) qui les rend compatibles avec le procédé. Il n'est donc pas étonnant de trouver dans l'art antérieur des indications sur l'utilisation de composés thioliques hydrophiles. Ainsi, par exemple, EP 753 488 (Nippon Shokubai & Sandoz) signale l'utilisation de thiols porteurs d'une fonction acide ou alcool. EP 976 769 (Atofina) de son côté, revendique l'utilisation d'un thiol particulier, le mercaptopropyl-triméthoxy-silane. Des agents de transfert autres que les thiols ont aussi été utilisés dans les familles chimiques des aldéhydes (formaldéhyde, acétaldéhyde ...), des alcools (isopropanol ...), des amines (hydroxylamines ...), des dérivés phosphorés (comme l'H₃PO₂, H₃PO₃ ou leurs sels), mais leur efficacité est souvent moindre par rapport aux thiols, d'où le besoin d'utiliser des combinaisons d'agents de transfert de manière à limiter la longueur moyenne des chaînes des super plastifiants à des valeurs compatibles avec l'optimum de performances, par exemple, en matière de réduction d'eau.

L'utilisation nécessaire d'agents de transfert pour limiter la masse moléculaire (ou longueur de chaîne) des copolymères polycarboxylates obtenus en solution aqueuse, n'est pas libre d'inconvénients. Parmi ceux-ci, nous pouvons citer :
- Les problèmes d'odeur conférée aux produits, par exemple, lors de l'utilisation de thiols, certains aldéhydes ou encore certaines amines.
- Les problèmes d'hygiène industrielle liés à l'utilisation de composés toxiques comme certains thiols, le formaldéhyde, etc ...
- L'impact économique sur le produit, vu que certains de ces composés sont coûteux et/ou doivent être utilisés dans des proportions relativement importantes. C'est le cas, par exemple du mercaptopropyl-triméthoxy-silane.
- Le manque d'efficacité dans le contrôle des masses moléculaires de certains composés, ce qui oblige à les doser en grande quantité ou à les combiner avec d'autres agents de transfert, compliquant ainsi le procédé de synthèse.

La demanderesse a trouvé qu'il était possible de palier à tous ces inconvénients, avec les autres performances d'application au moins identiques sinon améliorées par l'utilisation d'un système de contrôle des masses moléculaires, intervenant simultanément lors des étapes d'amorçage et de transfert radicalaire, ce qui est l'un des objets de l'invention, et par l'utilisation d'un procédé spécifique, constituant un autre objet de l'invention. Les super plastifiants obtenus en utilisant le système de contrôle des masses moléculaires faisant l'objet de l'invention, selon le procédé spécifique faisant également l'objet de l'invention, présentent remarquablement un excellent compromis entre les trois effets cités ci-dessus de haute réduction d'eau, maintien de rhéologie et propriétés mécaniques finales, impartis aux pâtes cimentaires. Les super plastifiants polycarboxylates pour liants hydrauliques minéraux, ainsi obtenus, sont également un objet de l'invention.

Ainsi, le premier objet de l'invention concerne un dispersant polymère, ayant les performances d'agent fluidifiant ou super plastifiant obtenu par un procédé spécifique.

Le procédé spécifique de préparation de ce dispersant est le deuxième objet de l'invention.

Un autre objet de l'invention concerne une composition de dispersant comprenant au moins un dispersant défini selon l'invention.

L'invention couvre aussi une dispersion aqueuse de polymère (latex) comprenant au moins un dispersant défini selon l'invention ou au moins un dispersant obtenu selon le procédé spécifique défini selon l'invention ou au moins un dispersant présent dans une composition de dispersant telle que définie selon l'invention.

L'invention couvre également une composition de liant hydraulique minéral, comme les pâtes cimentaires (coulis, mortier, béton) ou une composition de pâtes de particules minérales ou une composition de pâte pigmentaire ou une composition de dispersion aqueuse de polymère, ces compositions comprenant au moins un dispersant défini selon l'invention.

Sont également compris dans l'invention, l'utilisation des dispersants selon l'invention comme agents fluidifiants ou plastifiants pour pâtes aqueuses comprenant un liant hydraulique ou comme dispersants pour pâtes pigmentaires ou pour dispersions aqueuses de polymère.

Finalement, font partie de l'invention des préparations spécifiques à base de liants hydrauliques minéraux et les objets durcis obtenus à partir de celles-ci.

Selon un élément essentiel de l'invention, les agents classiques de transfert de chaîne utilisés fréquemment pour la synthèse de polycarboxylates en milieu aqueux sont substitués selon l'invention par un système de contrôle des masses moléculaires comprenant deux types de substances chimiques essentielles, à savoir : d'une part, un agent oxydant producteur de radicaux libres et, d'autre part, un agent réducteur particulier, susceptible de former un couple redox avec l'agent oxydant et de fonctionner également dans des conditions précises, comme un agent de transfert (limitateur de chaîne). Cette substitution permet de palier aux inconvénients déjà cités, associés aux systèmes de contrôle des masses moléculaires utilisés habituellement (e.g., les mercaptans) pour la synthèse de super plastifiants polycarboxylates par polymérisation radicalaire en milieu aqueux.

La synthèse de super plastifiants polycarboxylates utilisant ce système de contrôle de masses moléculaires se fait selon un procédé spécifique de polymérisation radicalaire en solution aqueuse, faisant également l'objet de l'invention. Ce procédé se caractérise, entre autre, par l'addition en semi-continu d'une alimentation en monomères et d'une alimentation en oxydant introduites sur un pied de cuve dans un réacteur à la température de polymérisation ; selon le mode d'introduction choisi pour le réducteur (cf. ci-dessous), le pied de cuve peut contenir seulement de l'eau ou, alors, une solution aqueuse diluée du réducteur. Une autre caractéristique de ce procédé est, précisément, la façon dont le réducteur est introduit dans le réacteur : en effet, celui-ci peut être introduit à travers une alimentation en semi-continu sur le pied de cuve, comme les monomères et l'oxydant ou, alors, il peut être introduit en sa totalité dans le pied de cuve qui, de ce fait, est constitué d'une solution aqueuse diluée de réducteur. Lorsque le réducteur est introduit en alimentation semi-continue comme l'oxydant et les monomères, deux variantes sont encore possibles : il peut être introduit en solution aqueuse, séparément des deux autres alimentations ou, alors, mélangé (dissout) dans les monomères. L'introduction du réducteur en pied de cuve (ou en alimentation semi-continue) et l'addition simultanée des alimentations de monomère et d'oxydant constituent un mode préféré de ce procédé, car selon ce mode et par rapport à d'autres cas de figure (e.g., introduction de l'oxydant en pied de cuve et alimentation semi-continue du réducteur et des monomères), le contrôle des masses moléculaires est significativement plus efficace et les performances des super plastifiants ainsi obtenus sont significativement meilleures, notamment en ce qui concerne l'effet réducteur d'eau sur les préparations cimentières. Aussi, parmi les deux modes possibles d'introduction du réducteur, l'addition de la totalité en pied de cuve du réacteur est la modalité préférée, de par sa simplicité.

Le premier objet de l'invention est un dispersant polymère de type polycarboxylate comprenant au moins un copolymère obtenu à partir d'une composition de monomères comprenant :
A) 40 à 95%, de préférence 50 à 90% et plus préférentiellement de 65 à 80% en moles d'unités dérivées d'au moins un monomère carboxylique insaturé
B) 5 à 60%, de préférence 10 à 50% et plus préférentiellement de 15 à 35% en moles d'unités dérivées d'au moins un monomère ester acrylique ou méthacrylique, contenant une chaîne polyéther
C) 0 à 20%, de préférence 0,5 à 10% et plus préférentiellement de 1 à 5% en moles d'unités d'au moins un tiers monomère sélectionné parmi : ester acrylique ou ester méthacrylique ou acrylamide ou dérivé de l'acrylamide ou monomère vinyl aromatique ou son dérivé sulphoné et de préférence comme vinyl aromatique le styrène ou un dérivé styrénique sulphoné
   et avec ledit copolymère ayant une distribution de masses moléculaires contrôlée, prouvant s'obtenir par un procédé comprenant les étapes de :
   i) polymérisation en solution aqueuse à une température allant de 70 à 95°C, de préférence de 70 à 80°C, avec un système d'amorçage et de transfert comprenant :
      D) un agent oxydant, de préférence sélectionné parmi le persulfate de potassium ou d'ammonium ou de sodium
      E) un agent réducteur, jouant en plus le rôle d'agent de transfert, sélectionné parmi les sels de métabisulfite, de préférence le métabisulfite de sodium ou de potassium, en l'absence de tout autre agent de transfert et en quantité telle que le rapport molaire monomères / réducteur n'excède pas 50, de préférence n'excède pas 40 et plus préférentiellement n'excède pas 32
   ii) addition en semi-continu de l'oxydant et du mélange de monomères, dans un temps allant de 1 à 4 heures
   iii) introduction du réducteur soit en pied de cuve avant le début de l'addition de l'oxydant et des monomères, soit en semi-continu mélangé aux monomères soit en semi-continu en alimentation séparée de ceux-ci et de l'oxydant.

Le monomère carboxyliques insaturé peut être de formule générale suivante : 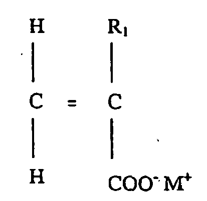 avec R₁ étant H ou CH₃, et M+ étant un cation sélectionné parmi : H+ (forme acide-non neutralisée) ou ammonium ou cation métallique à partir de métaux appartenant aux groupes IA, IIA. Le monomère carboxylique insaturé A) préféré est l'acide méthacrylique ou acrylique et plus préférentiellement l'acide méthacrylique. Le monomère ester acrylique ou méthacrylique B) contenant une chaîne polyéther peut être de formule générale : 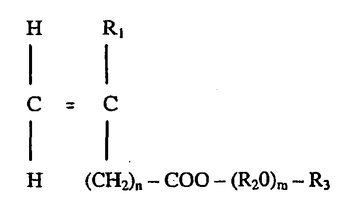 avec R₁ étant H ou CH₃, n étant un entier égal à 0, 1 ou 2, R₂ étant un groupe alkylène saturé comprenant 2, 3 ou 4 atomes de carbone, m un entier allant de 7 à 50 et R₃ étant H ou un groupe alkyle saturé comprenant 1, 2, 3 ou 4 atomes de carbone.

Le monomère ester acrylique ou méthacrylique B) préféré est le méthacrylate de méthoxy polyéthylène glycol avec la chaîne polyéther comprenant m motifs éthoxy allant de 20 à 48.

Quand le tiers monomère est présent, il peut être sélectionné parmi l'acrylate d'éthyle ou l'acrylate de méthyle ou le méthacrylate de méthyle ou le styrène.

L'agent oxydant préféré est le persulfate d'ammonium et l'agent réducteur préféré le métabisulfite de sodium.

Le rapport molaire monomères / agent oxydant de préférence ne doit pas excéder 60, de préférence il varie de 10 à 40 et plus préférentiellement il varie de 20 à 40.

Le rapport molaire monomères / agent réducteur de préférence ne doit pas excéder 40, de préférence il varie de 10 à 40 et plus préférentiellement il varie de 16 à 32.

Selon des conditions particulièrement préférées, l'agent oxydant est le persulfate d'ammonium et l'agent réducteur le métabisulfite de sodium et le rapport molaire monomères / métabisulfite varie de 16 à 32 et le rapport molaire monomères / persulfate varie de 20 à 40. La température de polymérisation varie de 70 à 95°C et de préférence de 70 à 80°C.

Le deuxième objet de l'invention concerne un procédé de préparation d'un dispersant tel que défini selon l'invention qui comprend les étapes de :
i) polymérisation en solution aqueuse, à une température allant de 70 à 95°C et de préférence de 70 à 80°C d'un mélange de monomères comprenant :
   A) 40 à 95%, de préférence 50 à 90% et plus préférentiellement de 65 à 80% en moles d'unités dérivées d'au moins un monomère carboxylique insaturé
   B) 5 à 60%, de préférence 10 à 50% et plus préférentiellement de 15 à 35% en moles d'unités dérivées d'au moins un monomère ester acrylique ou méthacrylique, contenant une chaîne polyéther
   C) 0 à 20%, de préférence 0,5 à 10% et plus préférentiellement de 1 à 5% en moles d'unités d'au moins un tiers monomère sélectionné parmi : ester acrylique ou méthacrylique ou acrylamide ou dérivé de l'acrylamide ou monomère vinyl aromatique ou son dérivé sulphoné et de préférence comme vinyl aromatique le styrène ou un dérivé styrénique sulphoné
      avec un système d'amorçage et de transfert comprenant :
   D) un agent oxydant, de préférence sélectionné parmi le persulfate de potassium ou d'ammonium ou de sodium
   E) un agent réducteur, jouant en plus le rôle d'agent de transfert, sélectionné parmi les sels de métabisulfite, de préférence le métabisulfite de sodium ou de potassium, en l'absence de tout autre agent de transfert et en quantité telle que le rapport molaire monomères / réducteur n'excède pas 50, de préférence n'excède pas 40 et plus préférentiellement n'excède pas 32
ii) addition en semi-continu de l'oxydant et du mélange de monomères, dans un temps allant de 1 à 4 heures
iii) introduction du réducteur soit en pied de cuve avant le début de l'addition de l'oxydant et des monomères, soit en semi-continu mélangé aux monomères soit, en semi-continu en alimentation séparée de ceux-ci et de l'oxydant.

Le dispersant de l'invention peut être utilisé tel qu'obtenu selon le procédé de préparation en milieu aqueux, soit sous forme de composition de dispersant, plus particulièrement composition aqueuse contenant au moins un tel dispersant. L'extrait sec en poids de la solution aqueuse peut aller de 5 à 60% et de préférence de 30 à 45%.

Un autre objet de l'invention concerne une composition de liant hydraulique minéral ou composition de pâtes de particules minérales ou composition de pâte pigmentaire ou composition de dispersion aqueuse de polymère comprenant au moins un dispersant tel que défini selon l'invention.

Comme compositions de liants hydrauliques, on peut citer : le coulis (composition d'eau et de ciment), le mortier (composition d'eau, de ciment et de sable) et le béton (composition d'eau, de ciment, de sable et de cailloux ou agrégats). Comme particules minérales, on peut citer : le carbonate de calcium et les particules céramiques. Comme pigments convenables pour pâte pigmentaire aqueuse, on peut citer : le dioxyde de titane et des pigments organiques.

Plus particulièrement, sont concernées des compositions de liant hydraulique minéral comme le coulis, le mortier, le béton, avec un rapport eau /ciment de 0,2 à 1, de préférence 0,3 à 0,8 et plus préférentiellement de 0,5 à 0,6 et un rapport dispersant / ciment de 0,05/100 à 20/100 et de préférence de 0,05/100 à 15/100 et plus particulièrement de 0.05/100 à 5/100.

Encore plus particulièrement, sont concernées des préparations à base de liants hydrauliques minéraux comprenant les dispersants de l'invention où la quantité de copolymère utilisée, exprimée en pourcentage en poids sec de copolymère par rapport au ciment, varie de 0,05 à 15% et de préférence de 0,05 à 5%. De telles préparations peuvent comprendre en plus des tensioactifs, des additifs anti-entraînement d'air, des anti-mousse, des adoucissants, des retardateurs ou accélérateurs de prise ou des « fillers » (charges) ou des biocides ou autres additifs conventionnels.

Un autre objet de l'invention concerne l'utilisation des dispersants de l'invention, comme agents fluidifiants ou plastifiants de pâtes aqueuses comprenant un liant hydraulique, de préférence à base de ciment (coulis, mortier, béton) ou comme dispersants pour pâtes pigmentaires ou pour dispersions aqueuses de polymères ou de résines.

Un objet de l'invention concerne les articles durcis obtenus à partir de compositions ou préparations de liant hydraulique contenant comme agent fluidifiant au moins un dispersant selon l'invention.

Les super plastifiants polycarboxylates obtenus en utilisant le système de contrôle des masses moléculaires et le procédé de polymérisation de l'invention sont préparés en faisant polymériser les monomères suivants :
A) Un monomère carboxylique de formule générale : 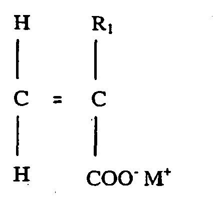 avec R₁ étant H ou CH₃, et M+ étant H+ (forme acide non neutralisée) ou un cation appartenant aux groupes IA, IIA ou ammonium.
B) Un monomère ester acrylique ou méthacrylique, contenant une chaîne latérale polyéther, de formule générale : 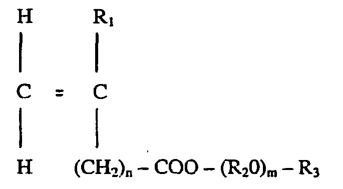 avec R₁ étant H ou CH₃, n un entier pouvant être égal à 0, 1 ou 2, R₂ étant un groupe alkylène saturé comprenant 2, 3 ou 4 atomes de carbone, m un entier compris entre 7 et 50 et R₃ étant H ou un groupe alkyle saturé comprenant 1, 2, 3 ou 4 atomes de carbone.
C) Eventuellement, un tiers monomère pouvant être un ester acrylique ou méthacrylique, l'acrylamide, un dérivé de l'acrylamide, le styrène ou un dérivé styrénique sulphoné.

Parmi les agents oxydants D) producteurs de radicaux libres servant à l'amorçage de la polymérisation radicalaire et constituant l'oxydant du couple redox utilisé pour contrôler les masses moléculaires selon l'invention, nous pouvons citer les persulfates (de sodium, ammonium ou potassium). L'agent réducteur E) du couple redox permettant le contrôle des masses moléculaires selon l'invention est le métabisulfite de sodium ou de potassium. Pour que le métabisulfite de sodium ou de potassium joue efficacement son rôle dans l'amorçage de la polymérisation radicalaire et dans le contrôle des masses moléculaires, il doit être d'une pureté supérieure à 96% et de préférence supérieure à 97%. L'oxydant du couple redox permettant le contrôle des masses moléculaires, doit être de préférence utilisé dans des proportions bien définies données par le rapport molaire monomères / oxydant qui de préférence ne doit pas dépasser la valeur de 60, et plus préférentiellement varie de 10 à 40 et encore plus préférentiellement varie de 20 à 40. Le réducteur de ce même couple redox doit de préférence également intervenir dans la recette de polymérisation, dans des proportions précises données par le rapport monomères / réducteur qui de préférence ne doit pas dépasser la valeur de 40, et plus préférentiellement varie de 10 à 40 et encore plus préférentiellement varie de 16 à 32.

Les polymères super plastifiants polycarboxylates de l'invention sont synthétisés en polymérisation en solution aqueuse dont l'extrait sec final après polymérisation peut varier de 5 à 60% en poids et de préférence de 30 à 45% en poids. Les monomères peuvent être mélangés avant leur introduction dans le réacteur de polymérisation. Les proportions respectives des trois types de monomères cités ci-dessus, A, B et C peuvent être définies par leur pourcentage molaire par rapport au nombre total de moles de monomère. Ainsi, les concentrations du monomère carboxylique (A) doivent varier de 40 à 95% en mole, de préférence de 50 à 90% en mole et plus préférentiellement de 65 à 80%; le monomère ester acrylique ou méthacrylique, contenant la chaîne latérale polyéther (B) doit être présent dans la recette dans des concentrations allant de 5 à 60% en mole, de préférence de 10 à 50% en mole et plus préférentiellement de 15 à 35% ; les concentrations du tiers monomère (C) peuvent varier de 0 à 20% en mole, de préférence de 0,5 à 10% en mole et plus préférentiellement de 1 à 5%.

Le procédé de polymérisation qui constitue l'un des objets de l'invention se déroule comme suit pour ce qui concerne la modalité avec le réducteur dans le pied de cuve :
1) Le réacteur est chargé en eau déminéralisée et chauffé à une température de polymérisation allant de 70 à 95°C et de préférence de 70 à 80°C. Cette température, qui sera maintenue constante, est l'un des points importants du procédé. Cette plage de température contraste avec les températures de polymérisation habituelles lorsque le couple persulfate / métabisulfite est utilisé, comme dans la demande de brevet EP 753 488 (Nippon Shokubai & Sandoz) où la température de polymérisation doit être maintenue à des valeurs plus basses (de préférence entre 20 et 52°C). Pendant ce temps, un mélange des monomères de type A et B (éventuellement C) est préparé, tout comme des solutions aqueuses de l'agent oxydant (persulfate) et de l'agent réducteur (métabisulfite).
2) La totalité de la solution d'agent réducteur est ajoutée dans le réacteur contenant de l'eau déminéralisée (pied de cuve) à la température de polymérisation et des alimentations séparées vers le réacteur, du mélange de monomères et de 80% en poids de la solution aqueuse d'agent oxydant sont amorcées. La présence de tout agent réducteur dans le réacteur à la température de polymérisation au moment du début de l'ajout des monomères et de l'agent oxydant, est un point très important du procédé selon l'invention car cela permet d'obtenir des copolymères super plastifiants ayant un très bon compromis des performances.
3) L'alimentation semi-continue des monomères et de la solution d'agent oxydant (80% en poids du total de la solution d'oxydant préparée) au réacteur est maintenue pendant un temps allant de 1 à 4 heures, et de préférence de 1,5 à 3 heures. Au terme de l'addition, le milieu réactionnel est laissé en cuisson pendant 15 minutes.
4) Au terme des 15 minutes après la fin de l'addition des monomères, les 20% en poids restant de la solution d'agent oxydant sont ajoutés en une seule fois dans le réacteur et la cuisson est maintenue pendant 45 minutes supplémentaires.
5) Au terme des 45 minutes, comme indiqué précédemment, la solution de copolymère est refroidie et éventuellement neutralisée avec un agent alcalin soluble dans l'eau tel que la soude, la potasse l'ammoniaque, etc..., de manière à ajuster le pH de la solution à une valeur proche de 6 ou 7.

### Mesures des performances des produits :

Les performances des produits sont déterminées à travers des tests réalisés sur des formulations modèle de coulis (ciment + eau), mortiers (ciment + sable + eau) ou béton (ciment + granulats fins et gros + eau). Ces formulations de test sont, en général, simplifiées au maximum de telle sorte que des additifs souvent utilisés pour les applications finales tels que des biocides, des charges inertes, des tensioactifs ou des inhibiteurs d'absorption d'air, des retardateurs ou des accélérateurs de prise, sont exclus, sans que cela ne compromette en rien la validité de l'évaluation. Celle-ci est, de plus, toujours effectuée de manière comparative (e.g., par rapport à un produit commercial ou un produit connu).

Le test d'évaluation le plus utilisé par l'homme du métier des liants hydrauliques à base de ciment est le « slump-test » qui est une mesure d'étalement d'une préparation cimentaire (coulis, mortier ou béton). Plus l'étalement de la préparation est grand, plus la préparation est fluide et ceci peut être obtenu pour un type de ciment donné, par l'addition de : 1) plus d'eau, ce qui implique un rapport eau / ciment, E/C, plus élevé ; 2) plus de super plastifiant, ce qui implique un taux de super plastifiant par rapport au ciment (% en poids) plus élevé. A E/C et % de super plastifiant fixes, un super plastifiant est un meilleur réducteur d'eau si l'étalement dans le « slump-test » est supérieur à celui de la référence. A étalement en « slump-test » constant, un super plastifiant est plus réducteur d'eau que la référence si le rapport E/C et/ou le % en poids utilisés dans la préparation cimentaire, sont plus faibles que ceux utilisés avec la référence. Le test peut être répété à intervalles souvent réguliers de manière à déterminer l'évolution de l'étalement avec le temps. Le plus souvent, cette évolution est suivie le long d'une période de 2 heures pendant lesquelles moins l'étalement diminue (ou moins il diminue rapidement), plus le super plastifiant utilisé assure un bon maintien en rhéologie.

Des éprouvettes sont souvent réalisées avec la préparation cimentaire à l'étude de manière à suivre, après prise, leur comportement mécanique déterminé par la force de compression nécessaire à leur rupture.

Le contrôle des masses moléculaires des copolymères super plastifiants peut être vérifié par des mesures de masses et des distributions des masses moléculaires selon des techniques bien connues en science de polymères. Parmi celles-ci, la chromatographie d'exclusion stérique, (SEC) aussi connue comme chromatographie de perméation de gel (GPC). C'est une technique qui, une fois maîtrisée pour un système donné, permet un contrôle rapide des masses et des distributions de masses moléculaires.
Les exemples ci-dessous illustrent l'invention sans en limiter la portée :

### Exemple 1 (invention)

On charge 108 g d'eau déminéralisée dans un réacteur de polymérisation équipé d'une double enveloppe permettant la circulation d'un fluide caloporteur pour chauffer / refroidir le système, d'une entrée permettant l'introduction d'une sonde pour mesurer la température du milieu, d'une entrée permettant l'introduction d'azote gazeux pour chasser l'oxygène qui inhibe la réaction de polymérisation, d'un agitateur lié à un moteur permettant de tourner à vitesse variable, de deux entrées permettant l'ajout d'additifs et d'une sortie de vapeurs liée à un système de condensation / reflux. Le réacteur est chauffé de manière à ce que le milieu atteigne une température de 55°C et à ce moment, un flux d'azote est déclenché par barbotage dans l'eau déminéralisée. Le barbotage est maintenu pendant 30 minutes et sous agitation modérée, tout en laissant la température du milieu monter jusqu'à la valeur cible de 75°C. Pendant le dégazage à l'azote, on prépare les deux mélanges suivants :
1) *Solution aqueuse d'oxydant :* dans un récipient approprié, on dissout 2,28 g de persulfate d'ammonium (ALDRICH) dans 20,52 g d'eau déminéralisée.
2) *Mélange de monomères et réducteur:* dans un récipient approprié, on mélange 1,76 g d'acide méthacrylique (ATOFINA) avec 365,23 g de Norsocryl N402 (ATOFINA), [monomère méthacrylate de méthoxypolyéthylène glycol à chaîne latérale de masse moyenne 2000 g /mole, en motifs polyoxyde d'éthylène contenant 3,05% en poids d'acide méthacrylique dont il est tenu compte pour le calcul des ratios molaires et 40% en poids d'eau dont il est tenu compte pour l'ajustement de l'extrait sec final] et 1,48 g de métabisulfite de sodium de pureté égale ou supérieure à 98% (PROLABO).

Lorsque les trente minutes de dégazage se sont écoulées et lorsque la température du réacteur est de 75°C, l'alimentation vers le réacteur de la solution aqueuse de persulfate d'ammonium et du mélange de monomères et réducteur est amorcée à l'aide de 2 pompes de dosage dont le débit est ajusté pour que le total du mélange de monomères (368,47 g) et 80% (en poids) de la solution aqueuse d'oxydant (18,24 g de solution) soient alimentés dans le réacteur en un temps de 2 heures et 30 minutes. Le barbotage d'azote et l'agitation sont maintenus. Une agitation vigoureuse est également maintenue dans le récipient contenant le mélange monomères / réducteur, pour limiter la réaction (prématurée) entre le réducteur et l'oxygène dissout dans le mélange. Au terme de l'alimentation (2h30), le milieu est laissé en cuisson à 75°C pendant 15 minutes avant d'ajouter d'un seul coup, le restant (20% en poids) de la solution aqueuse de persulfate d'ammonium (4,56 g de solution). Après l'addition du restant de la solution d'oxydant, la température est maintenue avec le réacteur sous azote et agitation pendant 45 minutes supplémentaires. Au terme de cette dernière cuisson, le milieu est refroidi et l'azote est coupé. La solution de copolymère polycarboxylate ainsi obtenue est sortie du réacteur à une température < 40°C. L'extrait sec déterminé par gravimétrie est de 45,5% [100 x (poids sec/poids de solution)].

### Mesure de l'étalement en fonction du temps, sur un mortier modèle :

La solution de super plastifiant est additivée de 1% d'anti-mousse CLEROL, par rapport à l'extrait sec.

Les valeurs d'E/C et de % poids de super plastifiant (par rapport au ciment) sont fixées respectivement à 0,54 et 0,175%.

On pèse 518,5 g de ciment sec de type LUMBRES, 1350 g de sable normalisé (CEN EN 196-1), 1,994 g de solution aqueuse de super plastifiant et 278,90 g d'eau potable (compte tenu de l'eau contenue dans la solution de super plastifiant).

On mélange l'eau et la solution de super plastifiant (eau de gâchage). L'eau de gâchage est introduite dans un malaxeur mécanique pour mortier puis, on ajoute le ciment et on mélange à 65 tours/minute pendant 30 secondes. Ensuite, on ajoute le sable et on continue le malaxage pendant 30 nouvelles secondes à 65 tours/minute. Le malaxage de l'ensemble est poursuivi pendant 30 secondes à 125 tours/minutes, après lesquels, la préparation est laissée au repos pendant 90 secondes, avant de malaxer à nouveau pendant 60 secondes à 125 tours/minutes.

Cette préparation est utilisée pour remplir un mini-cône d'Abrams dont les caractéristiques sont les suivantes :

| | |
|---|---|
| Poids minimum : | 4 kg |
| Diamètre supérieur : | 50 mm |
| Diamètre inférieur: | 100 mm |
| Hauteur : | 150 mm |

Le cône est posé sur une plaque en PVC de 50 x 50 cm et 1 cm d'épaisseur humidifiée à l'aide d'une éponge.

Le remplissage s'effectue en trois fois (1/3 de la hauteur à chaque fois) et dure un total de 2 minutes. A la fin de chaque étape de remplissage, le contenu du cône est tassé en « piquant » 25 fois la préparation à l'intérieur du cône à l'aide d'une tige métallique de 30 cm de longueur et 5 mm de diamètre. Cette opération permet d'enlever les bulles d'air.

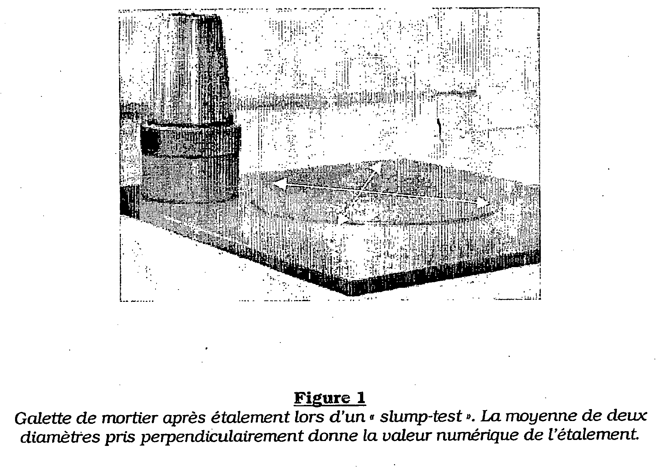

Exactement 2 minutes après le début de remplissage, le cône est soulevé et son contenu s'étale sur la plaque en PVC. Après 30 secondes, l'étalement est déterminé en mesurant la longueur en mm de deux diamètres perpendiculaires de la galette ronde de mortier et en faisant la moyenne des deux (cf. Figure 1). S'agissant de mesures d'étalement en fonction du temps, la préparation est récupérée après étalement et remise dans le malaxeur où elle est laissée au repos et couverte (pour empêcher l'évaporation d'eau) jusqu'au moment de la mesure suivante. Avant de faire un nouveau remplissage du cône, la préparation est malaxée à 125 tours/minute pendant 60 secondes. Les tests s'effectuent dans une salle climatisée dont la température est gardée constante à 21°C (tolérance de plus ou moins 2 degrés).

Le Tableau I présente l'évolution dans le temps de l'étalement correspondant à la préparation de mortier contenant le super plastifiant de cet exemple.

La distribution des masses moléculaires du copolymère de cet exemple a été déterminée par chromatographie d'exclusion stérique (SEC) en utilisant une chaîne dite « Waters SEC aqueuse » composée d'une pompe WATERS 510 munie de têtes 610°, débitant 0,800 ml/min. L'éluant a été de l'eau HPLC BIOSOLVE additivée de nitrate de lithium (MERCK), filtrée à 0,45 microns et dégazée à l'hélium. Les colonnes de séparation sont des colonnes TSK PW XL : pré-colonne 2500, puis des colonnes 6000, 2500, 3000 et 4000 placées dans un four à effet Pelletier JASCO réglé à 35°C. L'injection se fait par une vanne RHEODYNE type 7125 à injection centrale, munie d'une boucle de 20 micro-litres. La détection se fait par un réfractomètre ERMA/VARIAN RI 4 et, en mode double détection, un détecteur ultra-violet UV JASCO UVILEC 100 V, dit VARIAN 2050, est également utilisé à la longueur d'onde de 254 nm. Le signal est traité par un système informatique qui permet, à travers le logiciel PL CALIBER 7,01 de POLYMER LABORATORIES, d'avoir accès aux masses molaires moyennes. Les masses molaires sont calculées en utilisant une courbe d'étalonnage construite avec des étalons de polyéthylène glycol, PEG. Les chiffres donnés sont tous, donc, en équivalents PEG. Le Tableau IV montre les valeurs des masses moléculaires moyennes du copolymère de cet exemple.

Les propriétés mécaniques des mortiers obtenus avec le super plastifiant de cet exemple ont été déterminées dans un test de compression sur des éprouvettes de c. 500 g à 24 heures et à 7 jours de la préparation des éprouvettes. Le mortier utilisé a été fabriqué selon la recette suivante : 515 g de ciment CPA 42,5 R CP2 de LUMBRES, 150 g d'une charge calcaire Tacon P2, 1350 g de sable normalisé 0/4 de GEM et un rapport eau / ciment de 0,583. L'évaluation a été réalisée par rapport à une référence commerciale (Glénium 27 de MBT), avec un taux de super plastifiant de 0,176% en poids par rapport au ciment pour le produit de l'exemple 1 et de 0,203% en poids pour la référence. La résistance mécanique à la compression des éprouvettes de mortier obtenues avec le super plastifiant de cet exemple est présentée dans le Tableau V.

### Exemple 2 (invention)

On charge 90 g d'eau déminéralisée dans un réacteur de polymérisation équipé d'une double enveloppe permettant la circulation d'un fluide caloporteur pour chauffer / refroidir le système, d'une entrée permettant l'introduction d'une sonde pour mesurer la température du milieu, d'une entrée permettant l'introduction d'azote gazeux pour chasser l'oxygène qui inhibe la réaction de polymérisation, d'un agitateur lié à un moteur permettant de tourner à vitesse variable, de deux entrées permettant l'ajout d'additifs et d'une sortie de vapeurs liée à un système de condensation / reflux. Le réacteur est chauffé de manière à ce que le milieu atteigne une température de 55°C et à ce moment, un flux d'azote est déclenché par barbotage dans l'eau déminéralisée. Le barbotage est maintenu pendant 30 minutes et sous agitation modérée, tout en laissant la température du milieu monter jusqu'à la valeur cible de 75°C. Pendant le dégazage à l'azote, on prépare les trois mélanges suivants :
1) *Solution aqueuse de réducteur* : dans un récipient approprié, on dissout 1,48 g de métabisulfite de sodium de pureté supérieure ou égale à 98% (PROLABO) dans 18 g d'eau déminéralisée.
2) *Solution aqueuse d'oxydant* : dans un récipient approprié, on dissout 2,28 g de persulfate d'ammonium (ALDRICH) dans 20,52 g d'eau déminéralisée.
3) *Mélange de monomères :* dans un récipient approprié, on mélange 1,76 g d'acide méthacrylique (ATOFINA) avec 365,23 g de Norsocryl N402 (ATOFINA) monomère méthacrylate de méthoxypolyéthylène glycol à chaîne latérale de masse moyenne 2000 g / mole, en motifs polyoxyde d'éthylène (concernant composition considérée : voir remarque dans exemple 1).

Lorsque les trente minutes de dégazage se sont écoulées et lorsque la température du réacteur est de 75°C, la totalité de la solution aqueuse de métabisulfite de sodium est ajoutée dans le réacteur. En même temps, l'alimentation vers le réacteur de la solution aqueuse de persulfate d'ammonium et du mélange de monomères est amorcée à l'aide de 2 pompes de dosage dont le débit est ajusté pour que le total du mélange de monomères (366,99 g) et 80% (en poids) de la solution aqueuse d'oxydant (18,24 g de solution) soient alimentés dans le réacteur en un temps de 2 heures et 30 minutes. Le barbotage d'azote et l'agitation sont maintenus. Au terme de l'alimentation (2h30), le milieu est laissé en cuisson à 75°C pendant 15 minutes avant d'ajouter d'un seul coup, le restant (20% en poids) de la solution aqueuse de persulfate d'ammonium (4,56 g de solution). Après l'addition du restant de la solution d'oxydant, la température est maintenue avec le réacteur sous azote et agitation pendant 45 minutes supplémentaires. Au terme de cette dernière cuisson, le milieu est refroidi et l'azote est coupé. La solution de copolymère polycarboxylate ainsi obtenue est sortie du réacteur à une température < 40°C. L'extrait sec déterminé par gravimétrie est de 44,3%.

### Mesure de l'étalement en fonction du temps, sur un mortier modèle :

Les conditions concernant l'anti-mousse et les rapports E/C sont les mêmes que pour l'évaluation de l'exemple 1.

Ici on pèse 518,5 g de ciment sec de type LUMBRES, 1350 g de sable normalisé (CEN EN 196-1). 2,048 g de solution aqueuse de super plastifiant et 279,08 g d'eau potable (compte tenu de l'eau contenue dans la solution de super plastifiant).

Les mesures de l'évolution de l'étalement avec le temps sont faites comme décrit dans l'exemple 1 et figurent au Tableau I.

La distribution des masses moléculaires du copolymère de cet exemple a été déterminée par chromatographie d'exclusion stérique (SEC) selon la technique décrite ci-dessus (exemple 1). Les masses molaires moyennes ainsi déterminées figurent dans le Tableau IV.

### Exemple 3 (invention)

On suit le mode de préparation décrit dans l'exemple 1, sauf que la solution aqueuse d'oxydant est préparée avec 2,44 g de persulfate d'ammonium (ALDRICH) dans 21,95 g d'eau déminéralisée et le mélange de monomères et réducteur est préparé avec 3,45 g d'acide méthacrylique (ATOFINA), 361,72 g de Norsocryl N402 (ATOFINA) et 1,59 g de métabisulfite de sodium de pureté égale ou supérieure à 98% (PROLABO).

Lorsque les trente minutes de dégazage se sont écoulées et lorsque la température du réacteur est de 75°C, l'alimentation vers le réacteur de la solution aqueuse de persulfate d'ammonium et du mélange de monomères et réducteur est amorcée à l'aide de 2 pompes de dosage dont le débit est ajusté pour que le total du mélange de monomères (366,76 g) et 80% (en poids) de la solution aqueuse d'oxydant (19,51 g de solution) soient alimentés dans le réacteur en un temps de 2 heures et 30 minutes. Le barbotage d'azote et l'agitation sont maintenus. Une agitation vigoureuse est également maintenue dans le récipient contenant le mélange monomères / réducteur, pour limiter la réaction (prématurée) entre le réducteur et l'oxygène dissout dans le mélange. Au terme de l'alimentation (2h30), le milieu est laissé en cuisson à 75°C pendant 15 minutes avant d'ajouter d'un seul coup, le restant (20% en poids) de la solution aqueuse de persulfate d'ammonium (4,88 g de solution). L'addition du restant de la solution d'oxydant et la poursuite est réalisée dans les conditions décrites déjà dans l'exemple 1. L'extrait sec est de 44,3%.

### Mesure de l'étalement en fonction du temps, sur un mortier modèle :

Conditions anti-mousse et E/C : identiques à l'exemple 1.

On pèse 518,5 g de ciment sec de type LUMBRES, 1350 g de sable normalisé (CEN EN 196-1), 2,048 g de solution aqueuse de super plastifiant et 278,85 g d'eau potable (compte tenu de l'eau contenue dans la solution de super plastifiant).

Les mesures d'étalement sont faites comme décrit dans l'exemple 1 et présentées au Tableau I.

### Exemple 4 (invention)

On suit le mode opératoire décrit dans l'exemple 2 sauf que la solution aqueuse de réducteur est préparée avec 2,03 g de métabisulfite de sodium de pureté supérieure ou égale à 98% (PROLABO) dans 18 g d'eau déminéralisée, la solution aqueuse d'oxydant est préparée avec 2,44 g de persulfate d'ammonium (ALDRICH) dans 21,95 g d'eau déminéralisée, et le mélange de monomères est préparé avec 3,45 g d'acide méthacrylique (ATOFINA) et 361,72 g de Norsocryl N402 (ATOFINA).

Lorsque les trente minutes de dégazage se sont écoulées et lorsque la température du réacteur est de 75°C, la totalité de la solution aqueuse de métabisulfite de sodium est ajoutée dans le réacteur. En même temps, l'alimentation vers le réacteur de la solution aqueuse de persulfate d'ammonium et du mélange de monomères est amorcée à l'aide de 2 pompes doseuses dont le débit est ajusté pour que le total du mélange de monomères (365,17 g) et 80% (en poids) de la solution aqueuse d'oxydant (19,51 g de solution) soient alimentés dans le réacteur en un temps de 2 heures et 30 minutes. Le barbotage d'azote et l'agitation sont maintenus. Au terme de l'alimentation (2h30), le milieu est laissé en cuisson à 75°C pendant 15 minutes avant d'ajouter d'un seul coup, le restant (20% en poids) de la solution aqueuse de persulfate d'ammonium (4,88 g de solution). Suite et fin selon exemple 1. L'extrait sec est de 45,2%.

### Mesure de l'étalement en fonction du temps, sur un mortier modèle:

Conditions anti-mousse et E/C : identiques à l'exemple 1.

On pèse 518,5 g de ciment sec de type LUMBRES, 1350 g de sable normalisé (CEN EN 196-1), 2,007 g de solution aqueuse de super plastifiant et 278,89 g d'eau potable (compte tenu de l'eau contenue dans la solution de super plastifiant).

L'évolution de l'étalement en fonction du temps est suivie selon la méthode décrite dans l'exemple 1 et les résultats présentés au Tableau I.

Les propriétés mécaniques des mortiers obtenus avec le super plastifiant de cet exemple ont été déterminées dans un test de compression sur des éprouvettes de c. 500 g à 24 heures et à 7 jours de la préparation des éprouvettes. Le mortier utilisé a été fabriqué selon la recette suivante : 515 g de ciment HEMING 42,5 R, 150 g d'une charge calcaire Tacon P2, 1350 g de sable normalisé Millery 0/4 R et un rapport eau / ciment de 0,58. L'évaluation a été réalisée avec un taux de super plastifiant de 0,2% en poids par rapport au ciment. La résistance mécanique à la compression des éprouvettes de mortier obtenues avec le super plastifiant de cet exemple est présentée dans le Tableau VI.

### Exemple 5 (invention)

On suit le mode opératoire décrit dans l'exemple 2 sauf que la solution aqueuse de réducteur est préparée avec 1,69 g de métabisulfite de sodium de pureté supérieure ou égale à 98% (PROLABO) dans 18 g d'eau déminéralisée, la solution aqueuse d'oxydant est préparée avec 2,59 g de persulfate d'ammonium (ALDRICH) dans 23,35 g d'eau déminéralisée, et le mélange de monomères est préparé avec 5,1 g d'acide méthacrylique (ATOFINA) et 358,21 g de Norsocryl N402 (ATOFINA).

Les conditions précédant l'alimentation de l'oxydant et monomères sont identiques à celles de l'exemple 2 : 75°C et totalité du réducteur dans le pied de cuve. L'alimentation vers le réacteur de la solution aqueuse de persulfate d'ammonium et du mélange de monomères est amorcée à l'aide de 2 pompes doseuses dont le débit est ajusté pour que le total du mélange de monomères (363,31 g) et 80% (en poids) de la solution aqueuse d'oxydant (20,75 g de solution) soient alimentés dans le réacteur en un temps de 2 heures et 30 minutes. Le barbotage d'azote et l'agitation sont maintenus. Au terme de l'alimentation (2h30), le milieu est laissé en cuisson à 75°C pendant 15 minutes avant d'ajouter d'un seul coup, le restant (20% en poids) de la solution aqueuse de persulfate d'ammonium (5,19g de solution). Conditions de poursuite de la préparation selon exemple 1. L'extrait sec mesuré est de 44,3%.

### Mesure de l'étalement en fonction du temps, sur un mortier modèle :

Conditions d'anti-mousse et E/C : identiques à l'exemple 1.

On pèse 518,5 g de ciment sec de type LUMBRES, 1350 g de sable normalisé (CEN EN 196-1), 2,048 g de solution aqueuse de super plastifiant et 279,08 g d'eau potable (compte tenu de l'eau contenue dans la solution de super plastifiant).

Les mesures d'étalement sont faites comme décrit dans l'exemple 1 et présentées au Tableau I.

Les propriétés mécaniques des mortiers obtenus avec le super plastifiant de cet exemple ont été déterminées dans un test de compression sur des éprouvettes de c. 500 g à 24 heures et à 7 jours de la préparation des éprouvettes. Le mortier utilisé a été fabriqué selon la recette suivante : 515 g de ciment HEMING 42,5 R, 150 g d'une charge calcaire Tacon P2, 1350 g de sable normalisé Millery 0/4 R et un rapport eau / ciment de 0,58. L'évaluation a été réalisée avec un taux de super plastifiant de 0,25% en poids par rapport au ciment. La résistance mécanique à la compression des éprouvettes de mortier obtenues avec le super plastifiant de cet exemple est présentée dans le Tableau VI.

### Exemple 6 (invention)

On suit le mode opératoire décrit dans l'exemple 2 sauf que la solution aqueuse de réducteur est préparée avec 2,1 g de métabisulfite de sodium de pureté supérieure ou égale à 98% (PROLABO) dans 18 g d'eau déminéralisée, la solution aqueuse d'oxydant est préparée avec 3,2 g de persulfate d'ammonium (ALDRICH) dans 28,76 g d'eau déminéralisée, et le mélange de monomères est préparé avec 11,44 g d'acide méthacrylique (ATOFINA) et 345,92 g de Norsocryl N402 (ATOFINA).

Les conditions de préparation sont identiques à celles de l'exemple 2 mais avec une composition différente avec un mélange de monomères de 357,36 g et 80% (en poids) de la solution aqueuse d'oxydant (25,57 g de solution). L'extrait sec final mesuré est de 45,7%.

### Mesure de l'étalement initial, sur un mortier modèle :

Anti-mousse : conditions de l'exemple 1.

Les valeurs d'E/C et de % poids de super plastifiant (par rapport au ciment) sont fixées respectivement à 0,466 et 0,175%.

On pèse 518,5 g de ciment sec de type ALTKIRCH, 1350 g de sable normalisé (CEN EN 196-1), 1,986 g de solution aqueuse de super plastifiant et 240,54 g d'eau potable (compte tenu de l'eau contenue dans la solution de super plastifiant).

La mesure d'étalement initial est faite comme décrit dans l'exemple 1.

Le Tableau II présente une comparaison des étalements initiaux correspondant aux préparations de mortier des exemples 6 à 10, par rapport à celui d'une préparation de référence, préparée avec un super plastifiant commercial étant connu comme un haut réducteur d'eau (MBT).

### Exemple 7 (invention)

On suit le mode opératoire décrit dans l'exemple 2 sauf que la solution aqueuse de réducteur est préparée avec 2,17 g de métabisulfite de sodium de pureté supérieure ou égale à 98% (PROLABO) dans 18 g d'eau déminéralisée, la solution aqueuse d'oxydant est préparée avec 3,33 g de persulfate d'ammonium (ALDRICH) dans 30,01 g d'eau déminéralisée, et le mélange de monomères est préparé avec 12,94 g d'acide méthacrylique (ATOFINA) et 342,41 g de Norsocryl N402 (ATOFINA).

Les conditions de préparation sont identiques à celles de l'exemple 2 mais avec une composition différente (voir ci-dessus) avec un mélange de monomères de 355,35 g et 80% (en poids) de solution d'oxydant (26,67 g de solution).

L'extrait sec final mesuré par gravimétrie est de 45,9%.

### Mesure de l'étalement initial sur un mortier modèle :

Conditions d'anti-mousse et E/C : identiques à l'exemple 6.

On pèse 518,5 g de ciment sec de type ALTKIRCH, 1350 g de sable normalisé (CEN EN 196-1), 1,977 g de solution aqueuse de super plastifiant et 240,55 g d'eau potable (compte tenu de l'eau contenue dans la solution de super plastifiant).

La mesure d'étalement initial est faite comme décrit dans l'exemple 1. Les résultats sont présentés au Tableau II.

### Exemple 8 (invention)

On suit le mode opératoire décrit dans l'exemple 2 sauf que la solution aqueuse de réducteur est préparée avec 2,27 g de métabisulfite de sodium de pureté supérieure ou égale à 98% (PROLABO) dans 18 g d'eau déminéralisée, la solution aqueuse d'oxydant est préparée avec 3,49 g de persulfate d'ammonium (ALDRICH) dans 31,39 g d'eau déminéralisée, et le mélange de monomères est préparé avec 14,48 g d'acide méthacrylique (ATOFINA) et 340,65 g de Norsocryl N402 (ATOFINA).

Les conditions de préparation sont identiques à celles de l'exemple 2 mais avec une composition différente (voir ci-dessus) avec un mélange de monomères de 355,13 g et 80% (en poids) de la solution aqueuse d'oxydant (27,90 g de solution). L'extrait sec final déterminé par gravimétrie est de 46,0%.

### Mesure de l'étalement initial sur un mortier modèle :

Conditions d'anti-mousse et E/C : identiques à l'exemple 6.

On pèse 518,5 g de ciment sec de type ALTKIRCH. 1350 g de sable normalisé (CEN EN 196-1), 1,973 g de solution aqueuse de super plastifiant et 240,56 g d'eau potable (compte tenu de l'eau contenue dans la solution de super plastifiant).

La mesure d'étalement initial est faite comme décrit dans l'exemple 1. Les résultats sont présentés au Tableau II.

### Exemple 9 (invention)

On suit le mode opératoire décrit dans l'exemple 2 sauf que la solution aqueuse de réducteur est préparée avec 2,36 g de métabisulfite de sodium de pureté supérieure ou égale à 98% (PROLABO) dans 18 g d'eau déminéralisée, la solution aqueuse d'oxydant est préparée avec 3,62 g de persulfate d'ammonium (ALDRICH) dans 32,58 g d'eau déminéralisée, et le mélange de monomères est préparé avec 15,91 g d'acide méthacrylique (ATOFINA) et 337,14 g de Norsocryl N402 (ATOFINA).

Les conditions de préparation sont identiques à celles de l'exemple 2 mais avec une composition différente (voir ci-dessus) avec un mélange de monomères de 353,05 g et 80% (en poids) de la solution d'oxydant (28,96 g de solution). L'extrait sec final déterminé par gravimétrie est de 44,4%.

### Mesure de l'étalement initial sur un mortier modèle :

Conditions d'anti-mousse et E/C : identiques à l'exemple 6.

On pèse 518,5 g de ciment sec de type ALTKIRCH, 1350 g de sable normalisé (CEN EN 196-1), 2,044 g de solution aqueuse de super plastifiant et 240,48 g d'eau potable (compte tenu de l'eau contenue dans la solution de super plastifiant).

La mesure d'étalement initial est faite comme décrit dans l'exemple 1. Les résultats sont présentés au Tableau II.

### Exemple 10 (invention)

On suit le mode opératoire décrit dans l'exemple 2 sauf que la solution aqueuse de réducteur est préparée avec 2,44 g de métabisulfite de sodium de pureté supérieure ou égale à 98% (PROLABO) dans 18 g d'eau déminéralisée, la solution aqueuse d'oxydant est préparée avec 3,75 g de persulfate d'ammonium (ALDRICH) dans 33,74 g d'eau déminéralisée, et le mélange de monomères est préparé avec 17,32 g d'acide méthacrylique (ATOFINA) et 333,63 g de Norsocryl N402 (ATOFINA).

Les conditions de préparation sont identiques à celles de l'exemple 2 mais avec une composition différente (voir ci-dessus) avec un mélange de monomères de 350,95 g et 80% (en poids) de la solution aqueuse d'oxydant de 29,99 g. L'extrait sec final déterminé par gravimétrie est de 43,6%.

### Mesure de l'étalement initial sur un mortier modèle :

Conditions d'anti-mousse et E/C : identiques à l'exemple 6.

On pèse 518,5 g de ciment sec de type ALTKIRCH, 1350 g de sable normalisé (CEN EN 196-1), 2,081 g de solution aqueuse de super plastifiant et 240,45 g d'eau potable (compte tenu de l'eau contenue dans la solution de super plastifiant).

La mesure d'étalement initial est faite comme décrit dans l'exemple 1. Les résultats sont présentés au Tableau II.

### Exemple 11 (invention)

On suit le mode opératoire décrit dans l'exemple 2 sauf que la solution aqueuse de réducteur est préparée avec 1,98 g de métabisulfite de potassium dans 29,79 g d'eau déminéralisée, la solution aqueuse d'oxydant est préparée avec 2,60 g de persulfate d'ammonium (ALDRICH) dans 29,88 g d'eau déminéralisée, et le mélange de monomères est préparé avec 1,3 g d'acide méthacrylique (ATOFINA) et 440,45 g de Norsocryl N402 (ATOFINA).

Les conditions de préparation sont identiques à celles de l'exemple 2 mais avec une composition différente (voir ci-dessus) avec un mélange de monomères de 441,75 g et 80% (en poids) de la solution aqueuse d'oxydant (25,98 g de solution). L'extrait sec final déterminé par gravimétrie est de 45,4% et la viscosité Brookfield est de 294 mPa.s.

### Mesure de l'étalement en fonction du temps, sur un mortier modèle :

Les conditions concernant l'anti-mousse et les rapports E/C sont les mêmes que pour l'évaluation de l'exemple 1.

Ici on pèse 518,5 g de ciment sec de type LUMBRES, 1350 g de sable normalisé (CEN EN 196-1), 2,048 g de solution aqueuse de super plastifiant et 279,08 g d'eau potable (compte tenu de l'eau contenue dans la solution de super plastifiant).

Les mesures de l'évolution de l'étalement avec le temps sont faites comme décrit dans l'exemple 1 et figurent au Tableau VII.

### Exemple 12 (invention)

On suit le même mode opératoire que celui de l'exemple 11 sauf que la solution aqueuse de réducteur est préparée avec du métabisulfite de sodium.

### Contre-exemple 1 (comparatif)

On charge 108 g d'eau déminéralisée dans un réacteur de polymérisation équipé d'une double enveloppe permettant la circulation d'un fluide caloporteur pour chauffer / refroidir le système, d'un piquage permettant l'introduction d'une sonde pour mesurer la température du milieu, d'un piquage permettant l'introduction d'azote gazeux pour chasser l'oxygène qui inhibe la réaction de polymérisation, d'un agitateur lié à un moteur permettant de tourner à vitesse variable, de deux entrées permettant l'ajout d'additifs et d'une sortie de vapeurs liée à un système de condensation / reflux. Le réacteur est chauffé de manière à ce que le milieu atteigne une température de 55°C et à ce moment, un flux d'azote est déclenché par barbotage dans l'eau déminéralisée. Le barbotage est maintenu pendant 30 minutes et sous agitation modérée, tout en laissant la température du milieu monter jusqu'à la valeur cible de 75°C. Pendant le dégazage à l'azote, on prépare les deux mélanges suivants :
1) *Solution aqueuse d'oxydant*: dans un récipient approprié, on dissout 1,56 g de persulfate d'ammonium (ALDRICH) dans 14,08 g d'eau déminéralisée.
2) *Mélange de monomères et d'agent de transfert (mercaptan)* : dans un récipient approprié, on mélange 1,79 g d'acide méthacrylique (ATOFINA) avec 372,26 g de Norsocryl N402 (ATOFINA), monomère méthacrylate de méthoxypolyéthylène glycol à chaîne latérale de masse moyenne 2000 g /mole, en motifs polyoxyde d'éthylène et 1,66 g de mercaptoéthanol (ALDRICH).

Lorsque les trente minutes de dégazage se sont écoulées et lorsque la température du réacteur est de 75°C, l'alimentation vers le réacteur de la solution aqueuse de persulfate d'ammonium et du mélange de monomères et d'agent de transfert est amorcée à l'aide de 2 pompes de dosage dont le débit est ajusté pour que le total du mélange de monomères (375,71 g) et 80% (en poids) de la solution aqueuse d'oxydant (12,51 g de solution) soient alimentés dans le réacteur en un temps de 2 heures et 30 minutes. Le barbotage d'azote et l'agitation sont maintenus. Au terme de l'alimentation (2h30), le milieu est laissé en cuisson à 75°C pendant 15 minutes avant d'ajouter d'un seul coup, le restant (20% en poids) de la solution aqueuse de persulfate d'ammonium (3,13 g de solution). Après l'addition du restant de la solution d'oxydant, la température est maintenue avec le réacteur sous azote et agitation pendant 45 minutes supplémentaires. Au terme de cette dernière cuisson, le milieu est refroidi et l'azote est coupé. La solution de copolymère polycarboxylate ainsi obtenue est sortie du réacteur à < 40°C. L'extrait sec déterminé par gravimétrie est de 45,3%. La solution ainsi obtenue possède une odeur soufrée marquée.

### Mesure de l'étalement en fonction du temps, sur un mortier modèle :

La solution de super plastifiant est additivée de 1% d'anti-mousse CLEROL, par rapport à l'extrait sec.

Les valeurs d'E/C et de % poids de super plastifiant (par rapport au ciment) sont fixées respectivement à 0, 55 et 0,175%.

On pèse 518,5 g de ciment sec de type LUMBRES, 1350 g de sable normalisé (CEN EN 196-1), 2,003 g de solution aqueuse de super plastifiant et 284,08 g d'eau potable (compte tenu de l'eau contenue dans la solution de super plastifiant).

Les mesures d'étalement sont faites comme décrit dans l'exemple 1.

Le Tableau I présente l'évolution dans le temps de l'étalement correspondant à la préparation de mortier contenant le super plastifiant de cet exemple. Il est à noter que la préparation du contre-exemple 1 est obtenue avec un rapport E/C plus élevé, ce qui la place encore plus en dessous des performances des exemples 1-5.

### Contre-exemple 2 (comparatif)

On suit le mode de préparation décrit dans l'exemple 1, sauf que la solution aqueuse d'oxydant est préparée avec 2,29 g de persulfate d'ammonium (ALDRICH) dans 20,62 g d'eau déminéralisée et le mélange de monomères et réducteur est préparé avec 1,77 g d'acide méthacrylique (ATOFINA), 366,99 g de Norsocryl N402 (ATOFINA) et 0,8 g de métabisulfite de sodium de pureté égale ou supérieure à 98% (PROLABO).

Lorsque les trente minutes de dégazage se sont écoulées et lorsque la température du réacteur est de 75°C, l'alimentation vers le réacteur de la solution aqueuse de persulfate d'ammonium et du mélange de monomères et réducteur est amorcée à l'aide de 2 pompes de dosage dont le débit est ajusté pour que le total du mélange de monomères (369,56 g) et 80% (en poids) de la solution aqueuse d'oxydant (18,33 g de solution) soient alimentés dans le réacteur en un temps de 2 heures et 30 minutes. Le barbotage d'azote et l'agitation sont maintenus. Une agitation vigoureuse est également maintenue dans le récipient contenant le mélange monomères / réducteur, pour limiter la réaction (prématurée) entre le réducteur et l'oxygène dissout dans le mélange. Au terme de l'alimentation (2h30), le milieu est laissé en cuisson à 75°C pendant 15 minutes avant d'ajouter d'un seul coup, le restant (20% en poids) de la solution aqueuse de persulfate d'ammonium (4,58 g de solution). Après l'addition du restant de la solution d'oxydant, la température est maintenue avec le réacteur sous azote et agitation pendant 45 minutes supplémentaires. Au terme de cette dernière cuisson, le milieu est refroidi et l'azote est coupé. La solution de copolymère polycarboxylate ainsi obtenue est sortie du réacteur à < 40°C. L'extrait sec déterminé par gravimétrie est de 45,0%.

### Mesure de l'étalement en fonction du temps, sur un mortier modèle :

La solution de super plastifiant est additivée de 1% d'anti-mousse CLEROL, par rapport à l'extrait sec.

Les valeurs d'E/C et de % poids de super plastifiant (par rapport au ciment) sont fixées respectivement à 0,53 et 0,175%.

On pèse 518,5 g de ciment sec de type LUMBRES, 1350 g de sable normalisé (CEN EN 196-1), 2,016 g de solution aqueuse de super plastifiant et 273,70 g d'eau potable (compte tenu de l'eau contenue dans la solution de super plastifiant).

Le Tableau III présente l'évolution dans le temps de l'étalement correspondant à la préparation de mortier contenant le super plastifiant de cet exemple. La référence est le produit de l'exemple 1 à un rapport E/C de 0,53.

La distribution des masses moléculaires du copolymère de cet exemple a été déterminée par chromatographie d'exclusion stérique (SEC) selon la technique décrite ci-dessus (exemple 1). Les masses molaires moyennes ainsi déterminées figurent dans le Tableau IV.

### Contre-exemple 3 (comparatif)

On charge 90 g d'eau déminéralisée dans un réacteur de polymérisation équipé d'une double enveloppe permettant la circulation d'un fluide caloporteur pour chauffer / refroidir le système, d'un piquage permettant l'introduction d'une sonde pour mesurer la température du milieu, d'un piquage permettant l'introduction d'azote gazeux pour chasser l'oxygène qui inhibe la réaction de polymérisation, d'un agitateur lié à un moteur permettant de tourner à vitesse variable, de deux entrées permettant l'ajout d'additifs et d'une sortie de vapeurs liée à un système de condensation / reflux. Le réacteur est chauffé de manière à ce que le milieu atteigne une température de 55°C et à ce moment, un flux d'azote est déclenché par barbotage dans l'eau déminéralisée. Le barbotage est maintenu pendant 30 minutes et sous agitation modérée, tout en laissant la température du milieu monter jusqu'à la valeur cible de 75°C. Pendant le dégazage à l'azote, on prépare les trois mélanges suivants :
1) *Solution aqueuse de réducteur :* dans un récipient approprié, on dissout 1,48 g de métabisulfite de sodium de pureté supérieure ou égale à 98% (PROLABO) dans 18 g d'eau déminéralisée.
2) *Solution aqueuse d'oxydant* : dans un récipient approprié, on dissout 2,28g de persulfate d'ammonium (ALDRICH) dans 20,52 g d'eau déminéralisée.
3) *Mélange de monomères :* dans un récipient approprié, on mélange 1,76 g d'acide méthacrylique (ATOFINA) avec 365,23 g de Norsocryl N402 (ATOFINA) monomère méthacrylate de méthoxypolyéthylène glycol à chaîne latérale de masse moyenne 2000 g / mole, en motifs polyoxyde d'éthylène.

Lorsque les trente minutes de dégazage se sont écoulées et lorsque la température du réacteur est de 75°C, la totalité de la solution aqueuse de persulfate d'ammonium est ajoutée dans le réacteur En même temps, l'alimentation vers le réacteur de la solution aqueuse de métabisulfite de sodium et du mélange de monomères est amorcée à l'aide de 2 pompes de dosage dont le débit est ajusté pour que le total du mélange de monomères (366,99 g) et 100% (en poids) de la solution aqueuse de réducteur (19,48 g de solution) soient alimentés dans le réacteur en un temps de 2 heures et 30 minutes. Le barbotage d'azote et l'agitation sont maintenus. Au terme de l'alimentation (2h30), le milieu est laissé en cuisson à 75°C pendant 60 minutes sous azote et agitation. Au terme de cette cuisson, le milieu est refroidi et l'azote est coupé. La solution de copolymère polycarboxylate ainsi obtenue est sortie du réacteur à < 40°C. L'extrait sec déterminé par gravimétrie est de 44,4%.

### Mesure de l'étalement en fonction du temps, sur un mortier modèle :

La solution de super plastifiant est additivée de 1% d'anti-mousse CLEROL, par rapport à l'extrait sec.

Les valeurs d'E/C et de % poids de super plastifiant (par rapport au ciment) sont fixées respectivement à 0,54 et 0,175%.

On pèse 518,5 g de ciment sec de type LUMBRES, 1350 g de sable normalisé (CEN EN 196-1), 2,044 g de solution aqueuse de super plastifiant et 278,85 g d'eau potable (compte tenu de l'eau contenue dans la solution de super plastifiant).

Les mesures d'étalement sont faites comme décrit dans l'exemple 1.

Le Tableau I présente l'évolution dans le temps de l'étalement correspondant à la préparation de mortier contenant le super plastifiant de cet exemple.

La distribution des masses moléculaires du copolymère de cet exemple a été déterminée par chromatographie d'exclusion stérique (SEC) selon la technique décrite ci-dessus (exemple 1). Les masses molaires moyennes ainsi déterminées figurent dans le Tableau IV.

### Contre-exemple 4 (comparatif)

On procède comme dans le contre-exemple 3 pour la phase de dégazage sauf que la quantité d'eau déminéralisée dans le réacteur est de 92 g. Pendant le dégazage à l'azote, on prépare les trois mélanges suivants :
1) *Solution aqueuse de réducteur :* dans un récipient approprié, on dissout 1,9 g d'hypophosphite de sodium dans 23,7 g d'eau déminéralisée.
2) *Solution aqueuse d'oxydant* : dans un récipient approprié, on dissout 2,60 g de persulfate d'ammonium (ALDRICH) dans 29,89 g d'eau déminéralisée.
3) *Mélange de monomères :* dans un récipient approprié, on mélange 1,30 g d'acide méthacrylique (ATOFINA) avec 440,61 g de Norsocryl N402 (ATOFINA) [monomère méthacrylate de méthoxypolyéthylène glycol à chaîne latérale de masse moyenne 2000 g/mole, en motifs polyoxyde d'éthylène contenant 3,35% en poids d'acide méthacrylique dont il est tenu compte pour le calcul des ratios molaires et 40,8% en poids d'eau dont il est tenu compte pour l'ajustement de l'extrait sec final].

Après le dégazage et lorsque la température du réacteur est de 75°C, la totalité de la solution aqueuse d'hypophosphite de sodium est ajoutée. En même temps, la solution aqueuse de persulfate d'ammonium et du mélange de monomères est amorcée à l'aide de 2 pompes doseuses avec un débit ajusté pour que le total du mélange de monomères (441,91 g) et 80% (en poids) de la solution aqueuse d'oxydant (26 g de solution) soient ajoutés en 2 heures et 30 minutes. Le barbotage d'azote et l'agitation sont maintenus. Au terme de l'alimentation (2h30), le milieu est laissé à 75°C pendant 15 minutes avant d'ajouter d'un seul coup, le restant (20% en poids) de la solution aqueuse de persulfate d'ammonium (6,5 g de solution). Après cette addition, la température est maintenue, avec le réacteur sous azote et agitation pendant 45 minutes supplémentaires. Au terme de cette dernière cuisson, le milieu est refroidi et l'azote est coupé. La solution de copolymère polycarboxylate ainsi obtenue est récupérée à une température < 40°C. L'extrait sec déterminé par gravimétrie est de 45% et la viscosité Brookfield de la solution est de 38 000 mPa.s.
Le produit obtenu est un mélange très visqueux et très difficilement manipulable. Le mortier correspondant n'a pas pu être caractérisé.

**Tableau I**

| | | | | | |
|---|---|---|---|---|---|
| *Variation de l'étalement en fonction du temps pour la préparation des exemples 1-5 et des contre-exemples 1 et 3, par rapport à la même préparation utilisant un super plastifiant commercial. Dans tous les cas, le rapport E*/*C est de 0,54 (sauf pour le contre-exemple 1 pour lequel E*/*C = 0,55) et le taux de super plastifiant est de 0,175% par rapport au ciment.* | | | | | |

| **Préparation** | **Rapport monomères A/B/C** | **Rapport monomères/ oxydant** | **Rapport monomères/ réducteur** | **Etalement (mm) vs**. **Temps (min)** | **% de variation par rapport à l'étalement initial** |
|---|---|---|---|---|---|
| Référence commerciale (Glénium 27) | - | - | - | 262 - 0 264 - 30 256 - 60 251 - 90 247 - 120 | 0 0,8 -3,0 -4,2 -5,7 |
| Exemple 1 | 60/40/0 | 25 | 32 | 260 - 0 260 - 30 260 - 60 251 - 90 246 - 120 | 0 0 0 -3,5 -5,4 |
| Exemple 2 | 60/40/0 | 25 | 32 | 256 - 0 257 - 30 253 - 60 248 - 90 245 - 120 | 0 0,4 -1,2 -3,1 -4,3 |
| Exemple 3 | 63/37/0 | 25 | 32 | 341 - 0 341 - 30 343 - 60 338 - 90 326 - 120 | 0 0 0,6 -0,9 -4,4 |
| Exemple 4 | 63/37/0 | 25 | 25 | 311 - 0 333 - 30 337 - 60 345 - 90 366 - 120 | 0 7,0 8,4 10,9 17,7 |
| Exemple 5 | 66/34/0 | 25 | 32 | 366 - 0 359 - 30 361 - 60 352 - 90 362 - 120 | 0 -1,9 -1,4 -3,8 -1,1 |
| Contre-exemple 1 | 60/40/0 | 37 | - | 257 - 0 252 - 30 245 - 60 236 - 90 221 - 120 | 0 -1,9 -4,7 -8,2 -14,0 |
| Contre-exemple 3 | 60/40/0 | 25 | 32 | 254 - 0 233 - 30 231 - 60 229 - 90 216 - 120 | 0 -8,3 -9,1 -9,8 -15,0 |

**Tableau II**

| *Etalements initiaux (à t = 30 secondes) pour les préparations des exemples 6 à 10, par rapport à la même préparation utilisant un super plastifiant commercial de référence. Dans tous les cas le rapport E*/*C est de 0,466 et le taux de super plastifiant est de 0,175% par rapport au ciment.* | | | | |
|---|---|---|---|---|
| **Préparation** | **Rapport monomères A/B/C** | **Rapport monomères** / **oxydant** | **Rapport monomères** / **réducteur** | **Etalement initial (mm)** |
| Référence : Glénium ACE-32 | - | - | - | 325 |
| Exemple 6 | 73/27/0 | 25 | 32 | 347 |
| Exemple 7 | 74/26/0 | 25 | 32 | 337 |
| Exemple 8 | 76/24/0 | 25 | 32 | 346 |
| Exemple 9 | 77/23/0 | 25 | 32 | 346 |
| Exemple 10 | 78/22/0 | 25 | 32 | 352 |

**Tableau III**

| *Variation de l'étalement en fonction du temps pour* la *préparation du contre-exemple 2, par rapport à la même préparation utilisant le super plastifiant de l'exemple 1. Dans les deux cas, le rapport E*/*C est de 0,53 et le taux de super plastifiant est de 0,175% par rapport au ciment* | | | | | |
|---|---|---|---|---|---|
| **Préparation** | **Rapport monomères A/B/C** | **Rapport monomères/ oxydant** | **Rapport monomères/ réducteur** | **Etalement (mm) vs. Temps (min)** | **% de variation par rapport à l'étalement initial** |
| Contre-exemple 2 | 60/40/0 | 25 | 60 | 250 - 0 231-30 223 - 60 217 - 90 215 - 120 | 0 -7,6 -10,8 -13,2 -14,0 |
| Exemple 1 | 60/40/0 | 25 | 32 | 254 - 0 256 - 30 254 - 60 250-90 246 - 120 | 0 0,8 0 -1,6 -3,1 |

**Tableau IV**

| *Masses moléculaires moyennes en nombre, Mn, en poids, Mw et indice de polydispersité, Mw*/*Mn, déterminés par chromatographie d'exclusion stérique sur certains copolymères des exemples et contre-exemples. Les valeurs sont données en équivalents PEG.* | | | | |
|---|---|---|---|---|
| **Référence** | **Mn (moyenne en nombre)** | **Mw (moyenne en poids)** | **Indice de polydispersité Mw/Mn** | **Type de distribution** |
| Exemple 1 | 21941 | 53156 | 2,423 | Monomodale avec un petit épaulement du côté des grandes masses |
| Contre-exemple 2 | 148385 16 117 | 354394 24762 | 2,388 1,536 | Bimodale avec des proportions équivalentes de chaque pic |
| Exemple 2 | 20382 | 37132 | 1,822 | Monomodale sans épaulement |
| Contre-exemple 3 | 26278 | 65948 | 2,510 | Monomodale avec un gros épaulement du côté des grandes masses |

**Tableau V**

| *Résistance mécanique en compression des éprouvettes de mortier obtenues avec le super plastifiant de l'exemple 1, comparée à celle d'une référence commerciale.* | | | | |
|---|---|---|---|---|
| **Référence** | **% super plastifiant** / **ciment** | **Poids d'éprouvette (g)** | **Résistance mécanique (compression) à 1 jour (MPa)** | **Résistance mécanique (compression) à 7 jours (MPa)** |
| Référence commerciale (Glénium 27) | 0,203 | 562 | 12,42 | 40,44 |
| Exemple 1 | 0,176 | 591 | 16,19 | 46,75 |

**Tableau VI**

| *Résistance mécanique en compression des éprouvettes de mortier obtenues avec les super plastifiants des exemples 4 et 5. Dans les deux cas, le rapport E*/*C est de 0,58.* | | | | |
|---|---|---|---|---|
| **Référence** | **% super plastifiant / ciment** | **Poids d'éprouvette (g)** | **Résistance mécanique (compression) à 1 jour (MPa)** | **Résistance mécanique (compression) à 7 jours (MPa)** |
| Exemple 4 | 0,200 | 576 | 15,3 | 49,4 |
| Exemple 5 | 0,250 | 586 | 15,2 | 49,3 |

**Tableau VII**

| *Etalement en fonction du temps pour les préparations de l'exemple 11 (utilisant comme réducteur le métabisulfite de potassium) et de l'exemple 12 (utilisant comme réducteur le métabisulfite de sodium). Dans les 2 cas, le rapport E*/*C est de 0,54 et le taux de super plastifiant est de 0,175% par rapport au ciment*. | |
|---|---|
| Préparation | Etalement (mm) vs. Temps (min) |
| Exemple 11 (métabisulfite de potassium) | 289-0 285-30 279-60 274-90 265-120 |
| Exemple 12 (métabisulfite de sodium) | 300-0 284-30 278-60 259-90 244-120 |

## Revendications

1. Dispersant polymère type polycarboxylate comprenant au moins un copolymère obtenu à partir d'une composition de monomères comprenant :
A) 40 à 95% en moles d'unités dérivées d'au moins un monomère carboxylique insaturé
B) 5 à 60% en moles d'unités dérivées d'au moins un monomère ester acrylique ou méthacrylique contenant une chaîne polyéther
C) 0 à 20% en moles d'unités d'au moins un tiers monomère sélectionné parmi : ester acrylique ou ester méthacrylique ou acrylamide ou dérivé de l'acrylamide ou monomère vinyl aromatique ou son dérivé sulphoné et de préférence comme vinyl aromatique le styrène ou un dérivé styrénique sulphoné
**caractérisé en ce que** ledit copolymère a une distribution de masses moléculaires contrôlée, pouvant s'obtenir par un procédé comprenant les étapes de :
i) polymérisation en solution aqueuse à une température allant de 70 à 95°C avec un système d'amorçage et de transfert comprenant :
D) un agent oxydant, de préférence sélectionné parmi le persulfate de potassium ou d'ammonium ou de sodium
E) un agent réducteur, jouant en plus le rôle d'agent de transfert, sélectionné parmi les sels de métabisulfite, en l'absence de tout autre agent de transfert et en quantité telle que le rapport molaire monomères/reducteur n'excède pas 50
ii) addition en semi-continu de l'oxydant et du mélange de monomères, dans un temps allant de 1 à 4 heures
iii) introduction du réducteur soit en pied de cuve avant le début de l'addition de l'oxydant et des monomères, soit en semi-continu mélangé aux monomères, soit en semi-continu en alimentation séparée de ceux-ci et de l'oxydant.

2. Dispersant selon la revendication 1 **caractérisé en ce que** ledit agent réducteur E) est sélectionné parmi le métabisulfite de sodium ou de potassium.

3. Dispersant selon les revendications 1 et 2 **caractérisé en ce que** le monomère carboxylique insaturé est de formule générale : 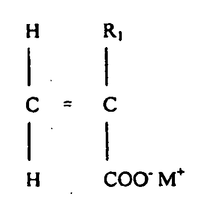 avec R₁ étant H ou CH₃, et M⁺ étant un cation sélectionné parmi : H⁺ ou ammonium ou cation métallique à partir de métaux appartenant aux groupes IA, IIA.

4. Dispersant selon les revendications 1 à 3 **caractérisé en ce que** le monomère carboxylique insaturé est l'acide méthacrylique.

5. Dispersant selon l'une des revendications 1 à 4 **caractérisé en ce que** le monomère ester acrylique ou méthacrylique contenant une chaîne polyéther est de formule générale : 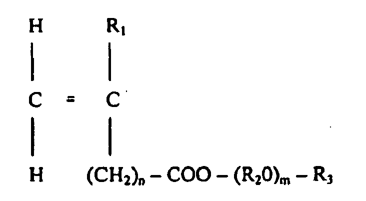 avec R₁ étant H ou CH₃, n étant un entier égal à 0, 1 ou 2, R₂ étant un groupe alkylène saturé comprenant 2, 3 ou 4 atomes de carbone, m un entier allant de 7 à 50 et R₃ étant H ou un groupe alkyle saturé comprenant 1, 2, 3 ou 4 atomes de carbone.

6. Dispersant selon l'une des revendications 1 à 5 **caractérisé en ce que** le monomère ester acrylique ou méthacrylique est le méthacrylate de méthoxy polyéthylène glycol avec la chaîne polyéther comprenant m motifs éthoxy allant de 20 à 48.

7. Dispersant selon l'une des revendications 1 à 6 **caractérisé en ce qu'**un tiers monomère est présent et sélectionné parmi l'acrylate d'éthyle ou l'acrylate de méthyle ou le méthacrylate de méthyle ou le styrène.

8. Dispersant selon l'une des revendications 1 à 7 **caractérisé en ce que** le tiers monomère C est présent à un taux allant de 0,5 à 10% en moles.

9. Dispersant selon l'une des revendications 1 à 8 **caractérisé en ce que** l'agent oxydant est le persulfate d'ammonium et l'agent réducteur est le métabisulfite de sodium.

10. Dispersant selon l'une des revendications 1 à 9 **caractérisé en ce que** le rapport molaire monomères / agent oxydant n'excède pas la valeur de 60.

11. Dispersant selon l'une des revendications 1 à 10 **caractérisé en ce que** le rapport molaire monomères / agent oxydant est de 10 à 40.

12. Dispersant selon l'une des revendications 1 à 11 **caractérisé en ce que** le rapport molaire monomères / agent réducteur n'excède pas la valeur de 40.

13. Dispersant selon l'une des revendications 1 à 12 **caractérisé en ce que** le rapport molaire monomères / agent réducteur est de 10 à 40.

14. Dispersant selon l'une des revendications 1 à 13 **caractérisé en ce que** l'agent oxydant est le persulfate d'ammonium et l'agent réducteur le métabisulfite de sodium et que le rapport molaire monomères / métabisulfite est de 10 à 40 et le rapport molaire monomères / persulfate est de 10 à 40.

15. Dispersant selon l'une des revendications 1 à 14 **caractérisé en ce que** la température de polymérisation est de 70 à 80°C.

16. Procédé de préparation d'un dispersant tel que défini selon l'une des revendication à 15 **caractérisé en ce qu'**il comprend les étapes de :
i) polymérisation en solution aqueuse, à une température allant de 70 à 95°C d'un mélange de monomères comprenant :
A) 40 à 95% en moles d'unités dérivées d'au moins un monomère carboxylique insaturé
B) 5 à 60% en moles d'unités dérivées d'au moins un monomère ester acrylique ou méthacrylique contenant une chaîne polyéther
C) 0 à 20% en moles d'unités d'au moins un tiers monomère sélectionné parmi : ester acrylique ou ester méthacrylique ou acrylamide ou dérivé de l'acrylamide ou monomère vinyl aromatique ou son dérivé sulphoné et de préférence comme vinyl aromatique le styrène ou un dérivé styrénique sulphoné
avec un système d'amorçage et de transfert comprenant :
D) un agent oxydant, de préférence sélectionné parmi le persulfate de potassium ou d'ammonium ou de sodium
E) un agent réducteur, jouant en plus le rôle d'agent de transfert, sélectionné parmi les sels de métabisulfite, en l'absence de tout autre agent de transfert et en quantité telle que le rapport molaire monomères / réducteur n'excède pas 50
ii) addition en semi-continu de l'oxydant et du mélange de monomères, dans un temps allant de 1 à 4 heures
iii) introduction du réducteur soit en pied de cuve avant le début de l'addition de l'oxydant et des monomères, soit en semi-continu mélangé aux monomères, soit en semi-continu en alimentation séparée de ceux-ci et de l'oxydant.

17. Procédé selon la revendication 16, **caractérisé en ce que** ledit agent réducteur E) est sélectionné parmi le métabisulfite de sodium ou de potassium.

18. Dispersant selon l'une des revendications 1 à 15, **caractérisé en ce qu'**il est sous forme d'une solution aqueuse à un taux en poids d'extrait sec allant de 5 à 60%.

19. Dispersant selon la revendication 18, **caractérisé en ce que** ledit taux est de 30 à 45%.

20. Composition de liant hydraulique ou composition de pâte de particules minérales ou composition de pâte pigmentaire ou composition de dispersion aqueuse de polymère, comprenant au moins un dispersant tel que défini selon l'une des revendications 1 à 15 et 18 à 19 ou obtenu selon le procédé défini selon les revendications 16 et 17.

21. Composition de liant hydraulique selon la revendication 20, **caractérisée en ce qu'**il s'agit d'une pâte cimentaire et **en ce que** le rapport eau / ciment est de 0,2 à 1 et le rapport dispersant/ciment est de 0,05/ 100 à 20/100.

22. Composition de liant hydraulique selon l'une des revendications 20 ou 21, **caractérisée en ce que** la quantité de copolymère utilisée, exprimée en pourcentage en poids sec de copolymère par rapport au ciment, va de 0,05 à 15%.

23. Composition de liant hydraulique selon la revendication 22, **caractérisée en ce qu'**elle contient en plus, des tensioactifs, des additifs anti-entraînement d'air, des anti-mousse, des adoucissants, des retardateurs ou des accélérateurs de prise, des charges, des biocides ou d'autres additifs conventionnels.

24. Utilisation des dispersants définis selon l'une des revendications 1 à 15 et 18 à 19 ou obtenus selon le procédé défini selon les revendications 16 et 17 comme agents fluidifiants ou plastifiants de pâtes aqueuses comprenant un liant hydraulique ou comme dispersants pour pâtes pigmentaires ou pour dispersions aqueuses de polymères ou de résines.

25. Articles durcis **caractérisés en ce qu'**ils sont obtenus à partir de compositions de liant hydraulique telles que définies selon l'une des revendications 21 à 23.

## Claims

1. Polymeric dispersant of polycarboxylate type comprising at least one copolymer obtained from a monomer composition comprising:
A) 40 to 95 mol% of units derived from at least one unsaturated carboxylic monomer,
B) 5 to 60 mol% of units derived from at least one acrylic ester or methacrylic ester monomer comprising a polyether chain,
C) 0 to 20 mol% of units of at least one third monomer selected from: acrylic ester or methacrylic ester or acrylamide or acrylamide derivative or vinylaromatic monomer or its sulphonated derivative and, preferably, as vinylaromatic, styrene or a sulphonated styrene derivative,
**characterized in that** the said copolymer has a controlled molecular mass distribution, which can be obtained by a process comprising the stages of:
i) polymerization in aqueous solution at a temperature ranging from 70 to 95°C with an initiation and transfer system comprising:
D) an oxidizing agent, preferably selected from potassium persulphate, ammonium persulphate or sodium persulphate,
E) a reducing agent, additionally acting as transfer agent, selected from metabisulphite salts, in the absence of any other transfer agent and in an amount such that the monomers/reducing agent molar ratio does not exceed 50,
ii) semi-continuous addition of the oxidizing agent and of the mixture of monomers over a time ranging from 1 to 4 hours,
iii) introduction of the reducing agent, either as vessel heel, before the beginning of the addition of the oxidizing agent and of the monomers, or semi-continuously, mixed with the monomers, or semi-continuously, as separate feed from the latter and from the oxidizing agent.

2. Dispersant according to Claim 1, **characterized in that** the said reducing agent E) is selected from sodium metabisulphite or potassium metabisulphite.

3. Dispersant according to Claims 1 and 2, **characterized in that** the unsaturated carboxylic monomer is of general formula: 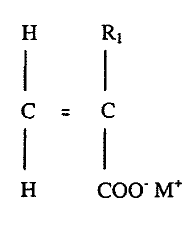 with R¹ being H or CH₃ and M⁺ being a cation selected from: H⁺ or ammonium or metal cation from metals belonging to groups IA and IIA.

4. Dispersant according to Claims 1 to 3, **characterized in that** the unsaturated carboxylic monomer is methacrylic acid.

5. Dispersant according to one of Claims 1 to 4, **characterized in that** the acrylic ester or methacrylic ester monomer comprising a polyether chain is of general formula: 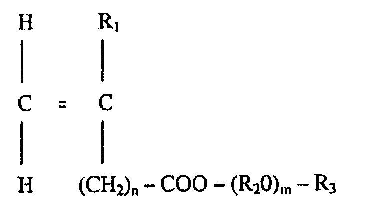 with R₁ being H or CH₃, n being an integer equal to 0, 1 or 2, R₂ being a saturated alkylene group comprising 2, 3 or 4 carbon atoms, m being an integer ranging from 7 to 50 and R₃ being H or a saturated alkyl group comprising 1, 2, 3 or 4 carbon atoms.

6. Dispersant according to one of Claims 1 to 5, **characterized in that** the acrylic ester or methacrylic ester monomer is methoxypolyethylene glycol methacrylate with a polyether chain comprising m ethoxy units ranging from 20 to 48.

7. Dispersant according to one of Claims 1 to 6, **characterized in that** a third monomer is present and is selected from ethyl acrylate or methyl acrylate or methyl methacrylate or styrene.

8. Dispersant according to one of Claims 1 to 7, **characterized in that** the third monomer C is present at a level ranging from 0.5 to 10 mol%.

9. Dispersant according to one of Claims 1 to 8, **characterized in that** the oxidizing agent is ammonium persulphate and the reducing agent is sodium metabisulphite.

10. Dispersant according to one of Claims 1 to 9, **characterized in that** the monomers/oxidizing agent molar ratio does not exceed the value of 60.

11. Dispersant according to one of Claims 1 to 10, **characterized in that** the monomers/oxidizing agent molar ratio is from 10 to 40.

12. Dispersant according to one of Claims 1 to 11, **characterized in that** the monomers/reducing agent molar ratio does not exceed the value of 40.

13. Dispersant according to one of Claims 1 to 12, **characterized in that** the monomers/reducing agent molar ratio is from 10 to 40.

14. Dispersant according to one of Claims 1 to 13, **characterized in that** the oxidizing agent is ammonium persulphate and the reducing agent is sodium metabisulphite and **in that** the monomers/metabisulphite molar ratio is from 10 to 40 and the monomers/persulphate molar ratio is from 10 to 40.

15. Dispersant according to one of Claims 1 to 14, **characterized in that** the polymerization temperature is from 70 to 80°C.

16. Process for the preparation of a dispersant as defined according to one of Claims 1 to 15, **characterized in that** it comprises the stages of:
i) polymerization in aqueous solution, at a temperature ranging from 70 to 95°C, of a mixture of monomers comprising:
A) 40 to 95 mol% of units derived from at least one unsaturated carboxylic monomer,
B) 5 to 60 mol% of units derived from at least one acrylic ester or methacrylic ester monomer comprising a polyether chain,
C) 0 to 20 mol% of units of at least one third monomer selected from: acrylic ester or methacrylic ester or acrylamide or acrylamide derivative or vinylaromatic monomer or its sulphonated derivative and, preferably, as vinylaromatic, styrene or a sulphonated styrene derivative,
with an initiation and transfer system comprising:
D) an oxidizing agent, preferably selected from potassium persulphate, ammonium persulphate or sodium persulphate,
E) a reducing agent, additionally acting as transfer agent, selected from metabisulphite salts, in the absence of any other transfer agent and in an amount such that the monomers/reducing agent molar ratio does not exceed 50,
ii) semi-continuous addition of the oxidizing agent and of the mixture of monomers over a time ranging from 1 to 4 hours,
iii) introduction of the reducing agent, either as vessel heel, before the beginning of the addition of the oxidizing agent and of the monomers, or semi-continuously, mixed with the monomers, or semi-continuously, as separate feed from the latter and from the oxidizing agent.

17. Process according to Claim 16, **characterized in that** the said reducing agent E) is selected from sodium metabisulphite or potassium metabisulphite.

18. Dispersant according to one of Claims 1 to 15, **characterized in that** it is in the form of an aqueous solution at a level of solids content by weight ranging from 5 to 60%.

19. Dispersant according to Claim 18, **characterized in that** the said level is from 30 to 45%.

20. Hydraulic binder composition or inorganic particle paste composition or pigment paste composition or aqueous polymer dispersion composition, comprising at least one dispersant as defined according to one of Claims 1 to 15 and 18 to 19 or obtained according to the process defined according to Claims 16 and 17.

21. Hydraulic binder composition according to Claim 20, **characterized in that** it is a cement paste and **in that** the water/cement ratio is from 0.2 to 1 and the dispersant/cement ratio is from 0.05/100 to 20/100.

22. Hydraulic binder composition according to either of Claims 20 and 21, **characterized in that** the amount of copolymer used, expressed as percentage by dry weight of copolymer with respect to the cement, ranges from 0.05 to 15%.

23. Hydraulic binder composition according to Claim 22, **characterized in that** it additionally comprises surfactants, air-detraining additives, antifoaming agents, softeners, setting retarders, setting accelerators, fillers, biocides or other conventional additives.

24. Use of the dispersants defined according to one of Claims 1 to 15 and 18 to 19 or obtained according to the process defined according to Claims 16 and 17 as fluidising agent or as plasticizers for aqueous pastes comprising a hydraulic binder or as dispersants for pigment pastes or for aqueous polymer or resin dispersions.

25. Hardened articles, **characterized in that** they are obtained from hydraulic binder compositions as defined according to one of Claims 21 to 23.

## Patentansprüche

1. Polymerdispergiermittel vom Polycarboxylat-Typ, umfassend mindestens ein aus einer Monomerenzusammensetzung, enthaltend
A) 40 bis 95 Mol-% von mindestens einem ungesättigten Carboxylmonomer abgeleitete Einheiten,
B) 5 bis 60 Mol-% von mindestens einem Acryl- oder Methacrylsäureestermonomer mit einer Polyetherkette abgeleitete Einheiten,
C) 0 bis 20 Mol-% Einheiten mindestens eines dritten Monomers, ausgewählt unter Acrylsäure-oder Methacrylsäureester, Acrylamid, Acrylamidderivat, vinylaromatischem Monomer oder dessen sulfoniertem Derivat und vorzugsweise als Vinylaromat Styrol oder ein sulfoniertes Styrolderivat,
erhaltenes Copolymer, **dadurch gekennzeichnet, daß** das Copolymer eine kontrollierte Molmassenverteilung aufweist, die durch ein Verfahren mit den folgenden Schritten erhältlich ist:
i) Polymerisation in wäßriger Lösung bei einer Temperatur von 70 bis 95°C mit einem Initiator- und Übertragungssystem, enthaltend:
D) ein Oxidationsmittel, vorzugsweise ausgewählt unter Kalium-, Ammonium- oder Natriumpersulfat,
E) ein Reduktionsmittel, das außerdem als Übertragungsmittel fungiert, ausgewählt unter Metabisulfitsalzen, in Abwesenheit jedes anderen Übertragungsmittels und in einer solchen Menge, daß das Molverhältnis von Monomeren zu Reduktionsmittel höchstens 50 beträgt,
ii) halbkontinuierliche Zugabe des Oxidationsmittels und der Monomerenmischung über einen Zeitraum von 1 bis 4 Stunden,
iii) Eintragen des Reduktionsmittels entweder als Vorlage vor Beginn der Zugabe des Oxidationsmittels und der Monomere oder halbkontinuierlich in Abmischung mit den Monomeren oder halbkontinuierlich als von den Monomeren und vom Oxidationsmittel separate Zufuhr.

2. Dispergiermittel nach Anspruch 1, **dadurch gekennzeichnet, daß** das Reduktionsmittel E) unter Natrium- oder Kaliummetabisulfit ausgewählt ist.

3. Dispergiermittel nach den Ansprüchen 1 und 2, **dadurch gekennzeichnet, daß** das ungesättigte Carboxylmonomer die allgemeine Formel: 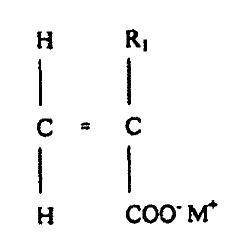 aufweist, wobei R₁ für H oder CH₃ steht und M⁺ ein unter H⁺, Ammonium oder einem Metallkation von Metallen der Gruppen IA und IIA ausgewähltes Kation steht.

4. Dispergiermittel nach den Ansprüchen 1 bis 3, **dadurch gekennzeichnet, daß** es sich bei dem ungesättigten Carboxylmonomer um Methacrylsäure handelt.

5. Dispergiermittel nach einem der Ansprüche 1 bis 4, **dadurch gekennzeichnet, daß** das Acryl- oder Methacrylsäureestermonomer mit einer Polyetherkette die allgemeine Formel: 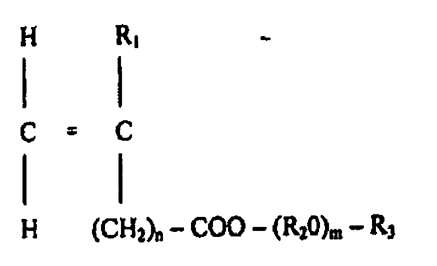 aufweist, wobei R₁ für H oder CH₃ steht, n für eine ganze Zahl mit einem Wert von 0, 1 oder 2 steht, R₂ für eine gesättigte Alkylengruppe mit 2, 3 oder 4 Kohlenstoffatomen steht, m für eine ganze Zahl von 7 bis 50 steht und R₃ für H oder eine gesättigte Alkylgruppe mit 1, 2, 3 oder 4 Kohlenstoffatomen steht.

6. Dispergiermittel nach einem der Ansprüche 1 bis 5, **dadurch gekennzeichnet, daß** es sich bei dem Acryl-oder Methacrylsäureestermonomer um Methoxypolyethylenglykolmethacrylat handelt, wobei die Polyetherkette m Ethoxyeinheiten im Bereich von 20 bis 48 enthält.

7. Dispergiermittel nach einem der Ansprüche 1 bis 6, **dadurch gekennzeichnet, daß** ein drittes Monomer vorliegt und unter Ethylacrylat, Methylacrylat, Methylmethacrylat oder Styrol ausgewählt ist.

8. Dispergiermittel nach einem der Ansprüche 1 bis 7, **dadurch gekennzeichnet, daß** das dritte Monomer C in einer Menge von 0,5 bis 10 Mol-% vorliegt.

9. Dispergiermittel nach einem der Ansprüche 1 bis 8, **dadurch gekennzeichnet, daß** es sich bei dem Oxidationsmittel um Ammoniumpersulfat und bei dem Reduktionsmittel um Natriummetabisulfit handelt.

10. Dispergiermittel nach einem der Ansprüche 1 bis 9, **dadurch gekennzeichnet, daß** das Molverhältnis von Monomeren zu Oxidationsmittel höchstens 60 beträgt.

11. Dispergiermittel nach einem der Ansprüche 1 bis 10, **dadurch gekennzeichnet, daß** das Molverhältnis von Monomeren zu Oxidationsmittel 10 bis 40 beträgt.

12. Dispergiermittel nach einem der Ansprüche 1 bis 11, **dadurch gekennzeichnet, daß** das Molverhältnis von Monomeren zu Reduktionsmittel höchstens 40 beträgt.

13. Dispergiermittel nach einem der Ansprüche 1 bis 12, **dadurch gekennzeichnet, daß** das Molverhältnis von Monomeren zu Reduktionsmittel 10 bis 40 beträgt.

14. Dispergiermittel nach einem der Ansprüche 1 bis 13, **dadurch gekennzeichnet, daß** es sich bei dem Oxidationsmittel um Ammoniumpersulfat und bei dem Reduktionsmittel um Natriummetabisulfit handelt und das Molverhältnis von Monomeren zu Metabisulfit 10 bis 40 und das Molverhältnis von Monomeren zu Persulfat 10 bis 40 beträgt.

15. Dispergiermittel nach einem der Ansprüche 1 bis 14, **dadurch gekennzeichnet, daß** die Polymerisationstemperatur 70 bis 80°C beträgt.

16. Verfahren zur Herstellung eines Dispergiermittels gemäß einem der Ansprüche 1 bis 15, **dadurch gekennzeichnet, daß** es die folgenden Schritte umfaßt:
i) Polymerisation einer Monomerenmischung, enthaltend
A) 40 bis 95 Mol-% von mindestens einem ungesättigten Carboxylmonomer abgeleitete Einheiten,
B) 5 bis 60 Mol-% von mindestens einem Acryl-oder Methacrylsäureestermonomer mit einer Polyetherkette abgeleitete Einheiten,
C) 0 bis 20 Mol-% Einheiten mindestens eines dritten Monomers, ausgewählt unter Acrylsäure- oder Methacrylsäureester, Acrylamid, Acrylamidderivat, vinylaromatischem Monomer oder dessen sulfoniertem Derivat und vorzugsweise als Vinylaromat Styrol oder ein sulfoniertes Styrolderivat,
in wäßriger Lösung bei einer Temperatur von 70 bis 95°C mit einem Initiator- und Übertragungssystem, enthaltend:
D) ein Oxidationsmittel, vorzugsweise ausgewählt unter Kalium-, Ammonium- oder Natriumpersulfat,
E) ein Reduktionsmittel, das außerdem als Übertragungsmittel fungiert, ausgewählt unter Metabisulfitsalzen, in Abwesenheit jedes anderen Übertragungsmittels und in einer solchen Menge, daß das Molverhältnis von Monomeren zu Reduktionsmittel höchstens 50 beträgt,
ii) halbkontinuierliche Zugabe des Oxidationsmittels und der Monomerenmischung über einen Zeitraum von 1 bis 4 Stunden,
iii) Eintragen des Reduktionsmittels entweder als Vorlage vor Beginn der Zugabe des Oxidationsmittels und der Monomere oder halbkontinuierlich in Abmischung mit den Monomeren oder halbkontinuierlich als von den Monomeren und vom Oxidationsmittel separate Zufuhr.

17. Verfahren nach Anspruch 16, **dadurch gekennzeichnet, daß** man das Reduktionsmittel E) unter Natrium- oder Kaliummetabisulfit auswählt.

18. Dispergiermittel nach einem der Ansprüche 1 bis 15, **dadurch gekennzeichnet, daß** es in Form einer wäßrigen Lösung mit einem Feststoffgehalt von 5 bis 60 Gew.-% vorliegt.

19. Dispergiermittel nach Anspruch 18, **dadurch gekennzeichnet, daß** der Gehalt 30 bis 45% beträgt.

20. Zusammensetzung von hydraulischem Bindemittel, Zusammensetzung von Paste anorganischer Teilchen, Zusammensetzung von Pigmentpaste oder Zusammensetzung von wäßriger Polymerdispersion, enthaltend mindestens ein Dispergiermittel gemäß einem der Ansprüche 1 bis 15 und 18 bis 19 oder ein nach dem Verfahren gemäß den Ansprüchen 16 und 17 erhaltenes Dispergiermittel.

21. Zusammensetzung von hydraulischem Bindemittel nach Anspruch 20, **dadurch gekennzeichnet, daß** es sich um eine Zementpaste handelt und das Verhältnis von Wasser zu Zement 0,2 bis 1 und das Verhältnis von Dispergiermittel zu Zement 0,05/100 bis 20/100 beträgt.

22. Zusammensetzung von hydraulischem Bindemittel nach Anspruch 20 oder 21, **dadurch gekennzeichnet, daß** die verwendete Copolymermenge, ausgedrückt in Trockengewichtsprozent Copolymer, bezogen auf den Zement, 0,05 bis 15% beträgt.

23. Zusammensetzung von hydraulischem Bindemittel nach Anspruch 22, **dadurch gekennzeichnet, daß** sie außerdem Tenside, Luftaustriebsadditive, Antischaummittel, Weichmacher, Härtungsverzögerer oder -beschleuniger, Füllstoffe, Biozide oder andere herkömmliche Additive enthält.

24. Verwendung von Dispergiermitteln gemäß einem der Ansprüche 1 bis 15 oder nach dem Verfahren gemäß den Ansprüchen 16 und 17 erhaltenen Dispergiermitteln als Verflüssiger oder Weichmacher für wäßrige Pasten, die ein hydraulisches Bindemittel enthalten, oder als Dispergiermittel für Pigmentpasten oder für wäßrige Polymer- oder Harzdispersionen.

25. Gehärtete Gegenstände, **dadurch gekennzeichnet, daß** sie aus den Zusammensetzungen von hydraulischem Bindemittel gemäß einem der Ansprüche 21 bis 23 erhältlich sind.
